(19)

Europäisches
Patentamt
European
Patent Office
Office européen
des brevets

(11) **EP 4 387 325 A1**

(12) **EUROPEAN PATENT APPLICATION**
published in accordance with Art. 153(4) EPC

(43) Date of publication:
**19.06.2024 Bulletin 2024/25**

(21) Application number: **21953528.3**

(22) Date of filing: **13.08.2021**

(51) International Patent Classification (IPC):
**H04W 36/00** (2009.01)  **H04W 36/30** (2009.01)
**H04W 36/18** (2009.01)  **H04W 36/08** (2009.01)

(52) Cooperative Patent Classification (CPC):
**H04W 36/083; H04W 36/00; H04W 36/302;**
H04W 36/00692; H04W 36/00698

(86) International application number:
**PCT/KR2021/010813**

(87) International publication number:
**WO 2023/017881 (16.02.2023 Gazette 2023/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **LG Electronics Inc.**
**Yeongdeungpo-gu**
**Seoul 07336 (KR)**

(72) Inventors:
• **HE, Yecheng**
**Seoul 06772 (KR)**
• **OH, Jaeky**
**Seoul 06772 (KR)**

• **CHUNG, Jaehoon**
**Seoul 06772 (KR)**
• **PARK, Jae Yong**
**Seoul 06772 (KR)**
• **KIM, Sungjin**
**Seoul 06772 (KR)**
• **JUNG, Sunghoon**
**Seoul 06772 (KR)**
• **KIM, Seongjoon**
**Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **APPARATUS AND METHOD FOR PERFORMING HANDOVER ON BASIS OF MEASUREMENT RESULT USING MEASUREMENT GAP IN WIRELESS COMMUNICATION SYSTEM**

(57) The present disclosure relates to performing a handover by considering battery efficiency in a wireless communication system, and a method of operating a terminal may include receiving measurement configuration information including information on a measurement gap and information on an expected target cell from a base station, performing measurement on at least one adjacent cell including the expected target cell during the measurement gap, transmitting a measurement report including a signal quality value for the expected target cell to the base station, and transmitting information related to an update of the probability distribution model after performing a handover to another base station determined by the base station.

FIG. 13

EP 4 387 325 A1

**Description**

**Technical Field**

The present disclosure relates to a wireless communication system, and more particularly, to a device and method for performing a handover based on a measurement result using a measurement gap in a wireless communication system.

**Background Art**

Radio access systems have come into widespread in order to provide various types of communication services such as voice or data. In general, a radio access system is a multiple access system capable of supporting communication with multiple users by sharing available system resources (bandwidth, transmit power, etc.). Examples of the multiple access system include a code division multiple access (CDMA) system, a frequency division multiple access (FDMA) system, a time division multiple access (TDMA) system, a single carrier-frequency division multiple access (SC-FDMA) system, etc.

In particular, as many communication apparatuses require a large communication capacity, an enhanced mobile broadband (eMBB) communication technology has been proposed compared to radio access technology (RAT). In addition, not only massive machine type communications (MTC) for providing various services anytime anywhere by connecting a plurality of apparatuses and things but also communication systems considering services/user equipments (UEs) sensitive to reliability and latency have been proposed. To this end, various technical configurations have been proposed.

**Disclosure**

**Technical Problem**

The present disclosure may provide a device and method for reducing disconnection of communication due to a measurement gap in a wireless communication system.

The present disclosure may provide a device and method for performing a seamless handover between different frequencies in a wireless communication system.

The present disclosure may provide a device and method for performing a seamless handover between different radio access technologies (RATs) in a wireless communication system

The present disclosure may provide a device and method for controlling a length of a measurement gap based on a probability distribution in a wireless communication system.

The technical objects to be achieved in the present disclosure are not limited to the above-mentioned technical objects, and other technical objects that are not mentioned may be considered by those skilled in the art through the embodiments described below.

**Technical Solution**

As an example of the present disclosure, a method of operating a terminal in a wireless communication system may include receiving measurement configuration information including information on a measurement gap and information on an expected target cell from a base station, performing measurement on at least one adjacent cell including the expected target cell during the measurement gap, transmitting a measurement report including a signal quality value for the expected target cell to the base station, and transmitting information related to an update of the probability distribution model after performing a handover to another base station determined by the base station. The signal quality value may be determined by weighting a measured value for the expected target cell.

As an example of the present disclosure, a method of operating a base station in a wireless communication system may include configuring a measurement gap based on a probability distribution model for adjacent cells, transmitting measurement configuration information including information on the measurement gap and information on an expected target cell to a terminal, receiving a measurement report including a signal quality value for the expected target cell from the terminal, and receiving information on an update of the probability distribution model after commanding a handover to another base station determined based on the measurement report.

As an example of the present disclosure, a terminal in a wireless communication system includes a transceiver and a processor coupled with the transceiver. The processor may be configured to receive measurement configuration information including information on a measurement gap and information on an expected target cell from a base station, to perform measurement on at least one adjacent cell including the expected target cell during the measurement gap, to transmit a measurement report including a signal quality value for the expected target cell to the base station, and to transmit information related to an update of the probability distribution model after performing a handover to another base station determined by the base station. The signal quality value may be determined by weighting a measured value for the expected target cell.

As an example of the present disclosure, a base station in a wireless communication system includes a transceiver and a processor coupled with the transceiver. The processor may be configured to configure a measurement gap based on a probability distribution model for adjacent cells, to transmit measurement configuration information including information on the measurement gap and information on an expected target cell to a terminal, to receive a measurement report including a signal quality value for the expected target cell from the terminal, and to receive information on an update of the probability distribution model after commanding a handover to another base station determined based on the measurement report.

As an example of the present disclosure, a device includes at least one processor and at least one computer memory coupled with the at least one processor and storing an instruction that instructs operations when executed by the at least one processor, and the operations may control the device to receive measurement configuration information including information on a measurement gap and information on an expected target cell from a base station, to perform measurement on at least one adjacent cell including the expected target cell during the measurement gap, to transmit a measurement report including a signal quality value for the expected target cell to the base station, and to transmit information related to an update of the probability distribution model after performing a handover to another base station determined by the base station. The signal quality value may be determined by weighting a measured value for the expected target cell.

As an example of the present disclosure, a non-transitory computer-readable medium storing at least one instruction includes the at least one instruction that is executable by a processor, and the at least one instruction may control a device to receive measurement configuration information including information on a measurement gap and information on an expected target cell from a base station, to perform measurement on at least one adjacent cell including the expected target cell during the measurement gap, to transmit a measurement report including a signal quality value for the expected target cell to the base station, and to transmit information related to an update of the probability distribution model after performing a handover to another base station determined by the base station. The signal quality value may be determined by weighting a measured value for the expected target cell.

The above-described aspects of the present disclosure are merely some of the preferred embodiments of the present disclosure, and various embodiments reflecting the technical features of the present disclosure may be derived and understood by those of ordinary skill in the art based on the following detailed description of the disclosure.


**Advantageous Effects**

As is apparent from the above description, the embodiments of the present disclosure have the following effects.
According to the present disclosure, disconnection of communication due to a measurement gap may be reduced, and a handover may be effectively performed.
It will be appreciated by persons skilled in the art that that the effects that can be achieved through the embodiments of the present disclosure are not limited to those described above and other advantageous effects of the present disclosure will be more clearly understood from the following detailed description. That is, unintended effects according to implementation of the present disclosure may be derived by those skilled in the art from the embodiments of the present disclosure.


**Description of Drawings**

The accompanying drawings are provided to help understanding of the present disclosure, and may provide embodiments of the present disclosure together with a detailed description. However, the technical features of the present disclosure are not limited to specific drawings, and the features disclosed in each drawing may be combined with each other to constitute a new embodiment. Reference numerals in each drawing may refer to structural elements.

FIG. 1 illustrates an example of a communication system applicable to the present disclosure.
FIG. 2 illustrates an example of a wireless apparatus applicable to the present disclosure.
FIG. 3 illustrates another example of a wireless device applicable to the present disclosure.
FIG. 4 illustrates an example of a hand-held device applicable to the present disclosure.
FIG. 5 illustrates an example of a car or an autonomous driving car applicable to the present disclosure.
FIG. 6 illustrates an example of an AI device applied to the present disclosure.
FIG. 7 illustrates a method of processing a transmitted signal applied to the present disclosure.

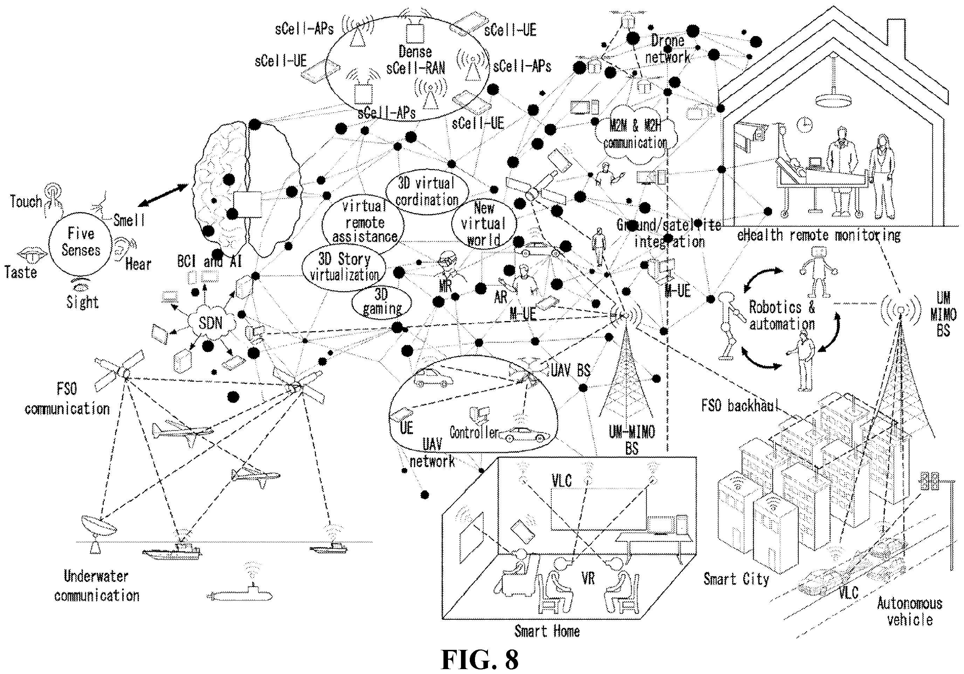

FIG. 8 illustrates showing an example of a communication structure providable in a 6G system applicable to the present disclosure.

FIG. 9 illustrates an electromagnetic spectrum appliable to the present disclosure.

FIG. 10 illustrates a THz communication method applicable to the present disclosure.

FIG. 11 illustrates examples of probability density functions of beta distribution applicable to the present disclosure.

FIGS. 12A to 12D illustrate an example of an update of a probability distribution model applicable to the present disclosure.

FIG. 13 illustrates a concept of handover in a wireless communication system according to an embodiment of the present disclosure.

FIG. 14 illustrates a concept of target cell selection based on Thompson sampling in a wireless communication system according to an embodiment of the present disclosure.

FIG. 15 illustrates examples of probability density functions of beta distribution available in a wireless communication system according to an embodiment of the present disclosure.

FIG. 16 illustrates an example of a procedure of controlling a handover in a wireless communication system according to an embodiment of the present disclosure.

FIG. 17 illustrates an example of a procedure of configuring a measurement gap in a wireless communication system according to an embodiment of the present disclosure.

FIG. 18 illustrates an example of a procedure of performing a handover in a wireless communication system according to an embodiment of the present disclosure.

FIG. 19 illustrates an example of a procedure of performing a handover based on a measurement gap controlled by a base station in a wireless communication system according to an embodiment of the present disclosure.

FIG. 20 illustrates an example of a signal flow for performing a handover based on a measurement gap controlled by a base station in a wireless communication system according to an embodiment of the present disclosure.

FIG. 21 illustrates a reward structure based on Thompson sampling (TS) in a wireless communication system according to an embodiment of the present disclosure.

## Mode for Invention

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an advanced base station (ABS), an access point, etc.

In the embodiments of the present disclosure, the term terminal may be replaced with a UE, a mobile station (MS), a subscriber station (SS), a mobile subscriber station (MSS), a mobile terminal, an advanced mobile station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NRj6G may be collectively referred to as a 3GPP system.

For background arts, terms, abbreviations, etc. used in the present disclosure, refer to matters described in the standard documents published prior to the present disclosure. For example, reference may be made to the standard documents 36.xxx and 38.xxx.

Communication system applicable to the present disclosure

Without being limited thereto, various descriptions, functions, procedures, proposals, methods and/or operational flowcharts of the present disclosure disclosed herein are applicable to various fields requiring wireless communication/connection (e.g., 5G).

Hereinafter, a more detailed description will be given with reference to the drawings. In the following drawings/description, the same reference numerals may exemplify the same or corresponding hardware blocks, software blocks or functional blocks unless indicated otherwise.

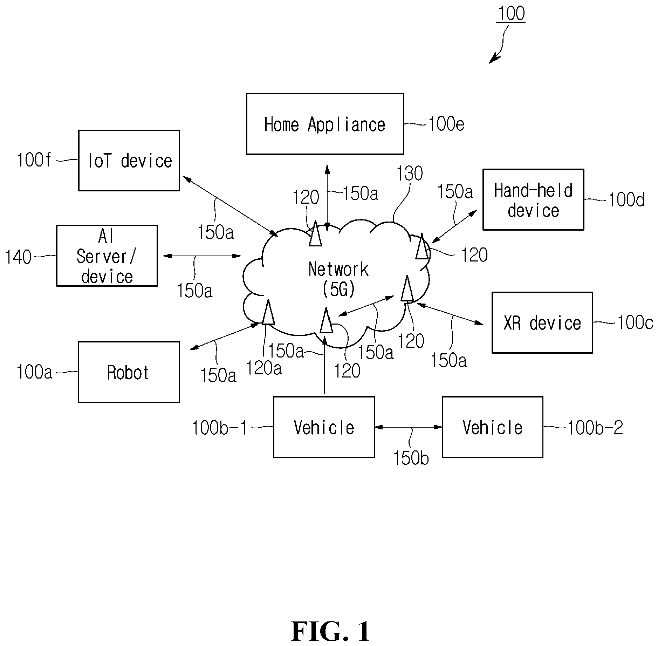

FIG. 1 illustrates an example of a communication system applicable to the present disclosure.

Referring to FIG. 1, the communication system 100 applicable to the present disclosure includes a wireless device, a base station and a network. The wireless device refers to a device for performing communication using radio access technology (e.g., 5G NR or LTE) and may be referred to as a communication/wireless/5G device. Without being limited thereto, the wireless device may include a robot 100a, vehicles 100b-1 and 100b-2, an extended reality (XR) device 100c, a hand-held device 100d, a home appliance 100e, an Internet of Thing (IoT) device 100f, and an artificial intelligence (AI) device/server 100g. For example, the vehicles may include a vehicle having a wireless communication function, an autonomous vehicle, a vehicle capable of performing vehicle-to-vehicle communication, etc. The vehicles 100b-1 and 100b-2 may include an unmanned aerial vehicle (UAV) (e.g., a drone). The XR device 100c includes an augmented reality (AR)/virtual reality (VR)/mixed reality (MR) device and may be implemented in the form of a head-mounted device (HMD), a head-up display (HUD) provided in a vehicle, a television, a smartphone, a computer, a wearable device, a home appliance, a digital signage, a vehicle or a robot. The hand-held device 100d may include a smartphone, a smart pad, a wearable device (e.g., a smart watch or smart glasses), a computer (e.g., a laptop), etc. The home appliance 100e may include a TV, a refrigerator, a washing machine, etc. The IoT device 100f may include a sensor, a smart meter, etc. For example, the base station 120 and the network 130 may be implemented by a wireless device, and a specific wireless device 120a may operate as a base station/network node for another wireless device.

The wireless devices 100a to 100f may be connected to the network 130 through the base station 120. AI technology is applicable to the wireless devices 100a to 100f, and the wireless devices 100a to 100f may be connected to the AI server 100g through the network 130. The network 130 may be configured using a 3G network, a 4G (e.g., LTE) network or a 5G (e.g., NR) network, etc. The wireless devices 100a to 100f may communicate with each other through the base station 120/the network 130 or perform direct communication (e.g., sidelink communication) without through the base station 120/the network 130. For example, the vehicles 100b-1 and 100b-2 may perform direct communication (e.g., vehicle to vehicle (V2V)/vehicle to everything (V2X) communication). In addition, the IoT device 100f (e.g., a sensor) may perform direct communication with another IoT device (e.g., a sensor) or the other wireless devices 100a to 100f.

Wireless communications/connections 150a, 150b and 150c may be established between the wireless devices 100a to 100f/the base station 120 and the base station 120/the base station 120. Here, wireless communication/connection may be established through various radio access technologies (e.g., 5G NR) such as uplink/downlink communication 150a, sidelink communication 150b (or D2D communication) or communication 150c between base stations (e.g., relay, integrated access backhaul (IAB). The wireless device and the base station/wireless device or the base station and the base station may transmit/receive radio signals to/from each other through wireless communication/connection 150a, 150b and 150c. For example, wireless communication/connection 150a, 150b and 150c may enable signal transmission/reception through various physical channels. To this end, based on the various proposals of the present disclosure, at least some of various configuration information setting processes for transmission/reception of radio signals, various signal processing procedures (e.g., channel encoding/decoding, modulation/demodulation, resource mapping/demapping, etc.), resource allocation processes, etc. may be performed.

Communication system applicable to the present disclosure

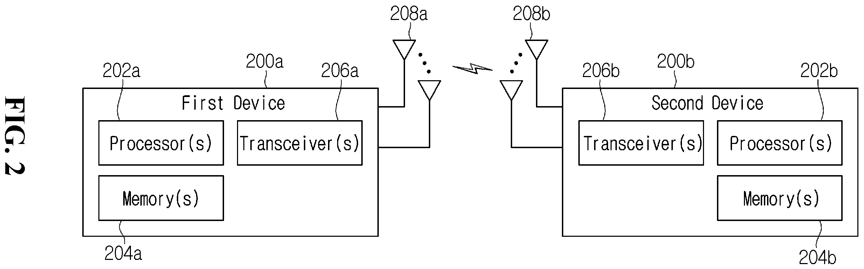

FIG. 2 illustrates an example of a wireless device applicable to the present disclosure.

Referring to FIG. 2, a first wireless device 200a and a second wireless device 200b may transmit and receive radio signals through various radio access technologies (e.g., LTE or NR). Here, {the first wireless device 200a, the second wireless device 200b} may correspond to {the wireless device 100x, the base station 120} and/or {the wireless device 100x, the wireless device 100x} of FIG. 1.

The first wireless device 200a may include one or more processors 202a and one or more memories 204a and may further include one or more transceivers 206a and/or one or more antennas 208a. The processor 202a may be configured to control the memory 204a and/or the transceiver 206a and to implement descriptions, functions, procedures, proposals, methods and/or operational flowcharts disclosed herein. For example, the processor 202a may process information in the memory 204a to generate first information/signal and then transmit a radio signal including the first information/signal through the transceiver 206a. In addition, the processor 202a may receive a radio signal including second information/signal through the transceiver 206a and then store information obtained from signal processing of the second information/signal in the memory 204a. The memory 204a may be coupled with the processor 202a, and store a variety of information related to operation of the processor 202a. For example, the memory 204a may store software code including instructions for performing all or some of the processes controlled by the processor 202a or performing the descriptions, functions, procedures, proposals, methods and/or operational flowcharts disclosed herein. Here, the processor 202a and the memory 204a may be part of a communication modem/circuit/chip designed to implement wireless communication technology (e.g., LTE or NR). The transceiver 206a may be coupled with the processor 202a to transmit and/or receive radio signals through one or more antennas 208a. The transceiver 206a may include a transmitter and/or a receiver. The transceiver 206a may be used interchangeably with a radio frequency (RF) unit. In the present disclosure, the wireless device may refer to a communication modem/circuit/chip.

The second wireless device 200b may include one or more processors 202b and one or more memories 204b and may further include one or more transceivers 206b and/or one or more antennas 208b. The processor 202b may be configured to control the memory 204b and/or the transceiver 206b and to implement the descriptions, functions, procedures, proposals, methods and/or operational flowcharts disclosed herein. For example, the processor 202b may process information in the memory 204b to generate third information/signal and then transmit the third information/signal through the transceiver 206b. In addition, the processor 202b may receive a radio signal including fourth information/signal through the transceiver 206b and then store information obtained from signal processing of the fourth information/signal in the memory 204b. The memory 204b may be coupled with the processor 202b to store a variety of information related to operation of the processor 202b. For example, the memory 204b may store software code including instructions for performing all or some of the processes controlled by the processor 202b or performing the descriptions, functions, procedures, proposals, methods and/or operational flowcharts disclosed herein. Herein, the processor 202b and the memory 204b may be part of a communication modem/circuit/chip designed to implement wireless communication technology (e.g., LTE or NR). The transceiver 206b may be coupled with the processor 202b to transmit and/or receive radio signals through one or more antennas 208b. The transceiver 206b may include a transmitter and/or a receiver.

The transceiver 206b may be used interchangeably with a radio frequency (RF) unit. In the present disclosure, the wireless device may refer to a communication modem/circuit/chip.

Hereinafter, hardware elements of the wireless devices 200a and 200b will be described in greater detail. Without being limited thereto, one or more protocol layers may be implemented by one or more processors 202a and 202b. For example, one or more processors 202a and 202b may implement one or more layers (e.g., functional layers such as PHY (physical), MAC (media access control), RLC (radio link control), PDCP (packet data convergence protocol), RRC (radio resource control), SDAP (service data adaptation protocol)). One or more processors 202a and 202b may generate one or more protocol data units (PDUs) and/or one or more service data unit (SDU) according to the descriptions, functions, procedures, proposals, methods and/or operational flowcharts disclosed herein. One or more processors 202a and 202b may generate messages, control information, data or information according to the descriptions, functions, procedures, proposals, methods and/or operational flowcharts disclosed herein. One or more processors 202a and 202b may generate PDUs, SDUs, messages, control information, data or information according to the functions, procedures, proposals and/or methods disclosed herein and provide the PDUs, SDUs, messages, control information, data or information to one or more transceivers 206a and 206b. One or more processors 202a and 202b may receive signals (e.g., baseband signals) from one or more transceivers 206a and 206b and acquire PDUs, SDUs, messages, control information, data or information according to the descriptions, functions, procedures, proposals, methods and/or operational flowcharts disclosed herein.

One or more processors 202a and 202b may be referred to as controllers, microcontrollers, microprocessors or microcomputers. One or more processors 202a and 202b may be implemented by hardware, firmware, software or a combination thereof. For example, one or more application specific integrated circuits (ASICs), one or more digital signal processors (DSPs), one or more digital signal processing devices (DSPDs), programmable logic devices (PLDs) or one or more field programmable gate arrays (FPGAs) may be included in one or more processors 202a and 202b. The descriptions, functions, procedures, proposals, methods and/or operational flowcharts disclosed herein may be implemented using firmware or software, and firmware or software may be implemented to include modules, procedures, functions, etc. Firmware or software configured to perform the descriptions, functions, procedures, proposals, methods and/or operational flowcharts disclosed herein may be included in one or more processors 202a and 202b or stored in one or more memories 204a and 204b to be driven by one or more processors 202a and 202b. The descriptions, functions, procedures, proposals, methods and/or operational flowcharts disclosed herein implemented using firmware or software in the form of code, a command and/or a set of commands.

One or more memories 204a and 204b may be coupled with one or more processors 202a and 202b to store various types of data, signals, messages, information, programs, code, instructions and/or commands. One or more memories 204a and 204b may be composed of read only memories (ROMs), random access memories (RAMs), erasable programmable read only memories (EPROMs), flash memories, hard drives, registers, cache memories, computer-readable storage mediums and/or combinations thereof. One or more memories 204a and 204b may be located inside and/or outside one or more processors 202a and 202b. In addition, one or more memories 204a and 204b may be coupled with one or more processors 202a and 202b through various technologies such as wired or wireless connection.

One or more transceivers 206a and 206b may transmit user data, control information, radio signals/channels, etc. described in the methods and/or operational flowcharts of the present disclosure to one or more other apparatuses. One or more transceivers 206a and 206b may receive user data, control information, radio signals/channels, etc. described in the methods and/or operational flowcharts of the present disclosure from one or more other apparatuses. For example, one or more transceivers 206a and 206b may be coupled with one or more processors 202a and 202b to transmit/receive radio signals. For example, one or more processors 202a and 202b may perform control such that one or more transceivers 206a and 206b transmit user data, control information or radio signals to one or more other apparatuses. In addition, one or more processors 202a and 202b may perform control such that one or more transceivers 206a and 206b receive user data, control information or radio signals from one or more other apparatuses. In addition, one or more transceivers 206a and 206b may be coupled with one or more antennas 208a and 208b, and one or more transceivers 206a and 206b may be configured to transmit/receive user data, control information, radio signals/channels, etc. described in the descriptions, functions, procedures, proposals, methods and/or operational flowcharts disclosed herein through one or more antennas 208a and 208b. In the present disclosure, one or more antennas may be a plurality of physical antennas or a plurality of logical antennas (e.g., antenna ports). One or more transceivers 206a and 206b may convert the received radio signals/channels, etc. from RF band signals to baseband signals, in order to process the received user data, control information, radio signals/channels, etc. using one or more processors 202a and 202b. One or more transceivers 206a and 206b may convert the user data, control information, radio signals/channels processed using one or more processors 202a and 202b from baseband signals into RF band signals. To this end, one or more transceivers 206a and 206b may include (analog) oscillator and/or filters.

Structure of wireless device applicable to the present disclosure

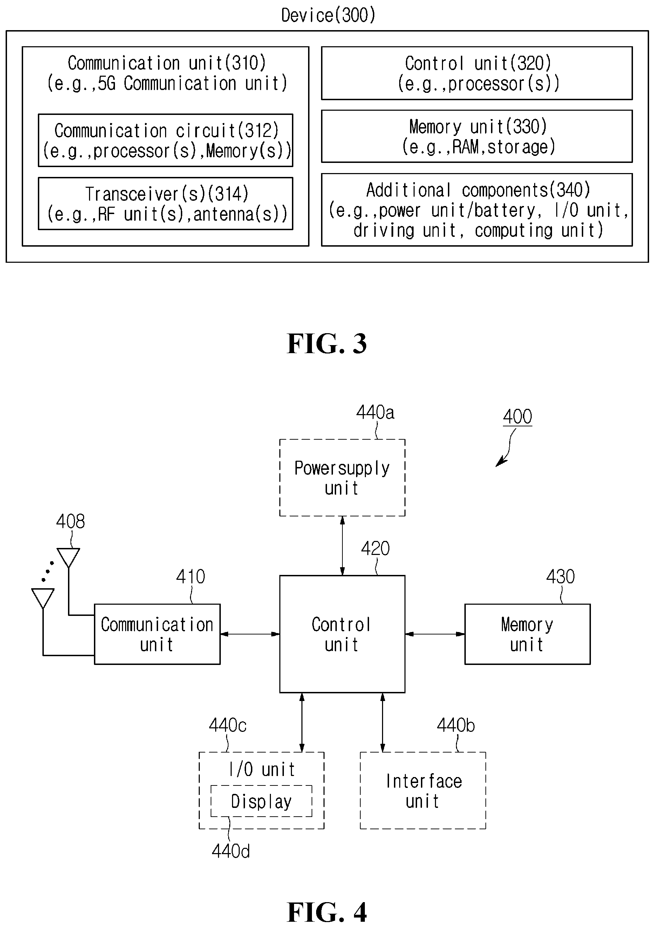

FIG. 3 illustrates another example of a wireless device applicable to the present disclosure.

Referring to FIG. 3, a wireless device 300 may correspond to the wireless devices 200a and 200b of FIG. 2 and include various elements, components, units/portions and/or modules. For example, the wireless device 300 may include a communication unit 310, a control unit (controller) 320, a memory unit (memory) 330 and additional components 340. The communication unit may include a communication circuit 312 and a transceiver(s) 314. For example, the communication circuit 312 may include one or more processors 202a and 202b and/or one or more memories 204a and 204b of FIG. 2. For example, the transceiver(s) 314 may include one or more transceivers 206a and 206b and/or one or more antennas 208a and 208b of FIG. 2. The control unit 320 may be electrically coupled with the communication unit 310, the memory unit 330 and the additional components 340 to control overall operation of the wireless device. For example, the control unit 320 may control electrical/mechanical operation of the wireless device based on a program/code/instruction/information stored in the memory unit 330. In addition, the control unit 320 may transmit the information stored in the memory unit 330 to the outside (e.g., another communication device) through the wireless/wired interface using the communication unit 310 over a wireless/wired interface or store information received from the outside (e.g., another communication device) through the wireless/wired interface using the communication unit 310 in the memory unit 330.

The additional components 340 may be variously configured according to the types of the wireless devices. For example, the additional components 340 may include at least one of a power unit/battery, an input/output unit, a driving unit or a computing unit. Without being limited thereto, the wireless device 300 may be implemented in the form of the robot (FIG. 1, 100a), the vehicles (FIG. 1, 100b-1 and 100b-2), the XR device (FIG. 1, 100c), the hand-held device (FIG. 1, 100d), the home appliance (FIG. 1, 100e), the IoT device (FIG. 1, 100f), a digital broadcast terminal, a hologram apparatus, a public safety apparatus, an MTC apparatus, a medical apparatus, a Fintech device (financial device), a security device, a climate/environment device, an AI server/device (FIG. 1, 140), the base station (FIG. 1, 120), a network node, etc. The wireless device may be movable or may be used at a fixed place according to use example/service.

In FIG. 3, various elements, components, units/portions and/or modules in the wireless device 300 may be coupled with each other through wired interfaces or at least some thereof may be wirelessly coupled through the communication unit 310. For example, in the wireless device 300, the control unit 320 and the communication unit 310 may be coupled by wire, and the control unit 320 and the first unit (e.g., 130 or 140) may be wirelessly coupled through the communication unit 310. In addition, each element, component, unit/portion and/or module of the wireless device 300 may further include one or more elements. For example, the control unit 320 may be composed of a set of one or more processors. For example, the control unit 320 may be composed of a set of a communication control processor, an application processor, an electronic control unit (ECU), a graphic processing processor, a memory control processor, etc. In another example, the memory unit 330 may be composed of a random access memory (RAM), a dynamic RAM (DRAM), a read only memory (ROM), a flash memory, a volatile memory, a non-volatile memory and/or a combination thereof.

Hand-held device applicable to the present disclosure

FIG. 4 illustrates an example of a hand-held device applicable to the present disclosure.

FIG. 4 shows a hand-held device applicable to the present disclosure. The hand-held device may include a smartphone, a smart pad, a wearable device (e.g., a smart watch or smart glasses), and a hand-held computer (e.g., a laptop, etc.). The hand-held device may be referred to as a mobile station (MS), a user terminal (UT), a mobile subscriber station (MSS), a subscriber station (SS), an advanced mobile station (AMS) or a wireless terminal (WT).

Referring to FIG. 4, the hand-held device 400 may include an antenna unit (antenna) 408, a communication unit (transceiver) 410, a control unit (controller) 420, a memory unit (memory) 430, a power supply unit (power supply) 440a, an interface unit (interface) 440b, and an input/output unit 440c. An antenna unit (antenna) 408 may be part of the communication unit 410. The blocks 410 to 430/440a to 440c may correspond to the blocks 310 to 330/340 of FIG. 3, respectively.

The communication unit 410 may transmit and receive signals (e.g., data, control signals, etc.) to and from other wireless devices or base stations. The control unit 420 may control the components of the hand-held device 400 to perform various operations. The control unit 420 may include an application processor (AP). The memory unit 430 may store data/parameters/program/code/instructions necessary to drive the hand-held device 400. In addition, the memory unit 430 may store input/output data/information, etc. The power supply unit 440a may supply power to the hand-held device 400 and include a wired/wireless charging circuit, a battery, etc. The interface unit 440b may support connection between the hand-held device 400 and another external device. The interface unit 440b may include various ports (e.g., an audio input/output port and a video input/output port) for connection with the external device. The input/output unit 440c may receive or output video information/signals, audio information/signals, data and/or user input information. The input/output unit 440c may include a camera, a microphone, a user input unit, a display 440d, a speaker and/or a haptic module.

For example, in case of data communication, the input/output unit 440c may acquire user input information/signal (e.g., touch, text, voice, image or video) from the user and store the user input information/signal in the memory unit 430. The communication unit 410 may convert the information/signal stored in the memory into a radio signal and transmit the converted radio signal to another wireless device directly or transmit the converted radio signal to a base station. In addition, the communication unit 410 may receive a radio signal from another wireless device or the base station and then restore the received radio signal into original information/signal. The restored information/signal may be stored in the memory unit 430 and then output through the input/output unit 440c in various forms (e.g., text, voice, image, video and haptic).

Type of wireless device applicable to the present disclosure

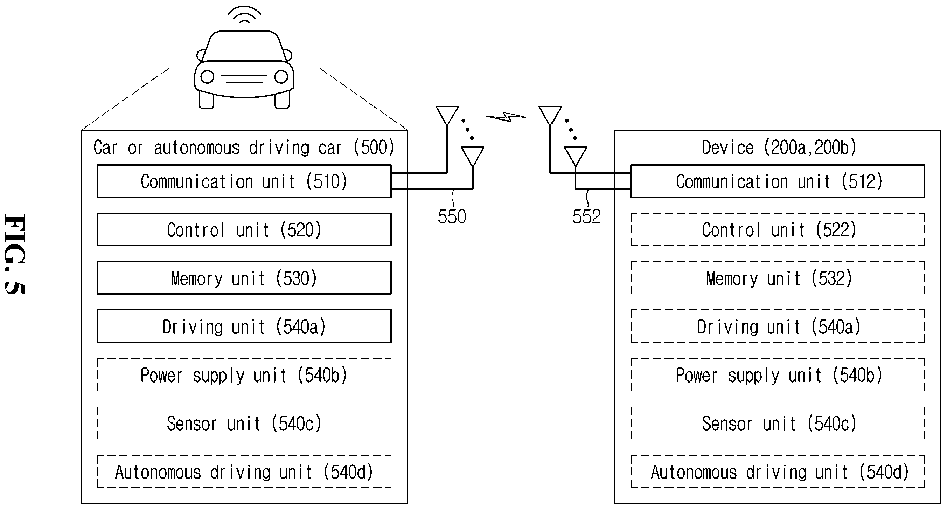

FIG. 5 illustrates an example of a car or an autonomous driving car applicable to the present disclosure.

FIG. 5 shows a car or an autonomous driving vehicle applicable to the present disclosure. The car or the autonomous driving car may be implemented as a mobile robot, a vehicle, a train, a manned/unmanned aerial vehicle (AV), a ship, etc. and the type of the car is not limited.

Referring to FIG. 5, the car or autonomous driving car 500 may include an antenna unit (antenna) 508, a communication unit (transceiver) 510, a control unit (controller) 520, a driving unit 540a, a power supply unit (power supply) 540b, a sensor unit 540c, and an autonomous driving unit 540d. The antenna unit 550 may be configured as part of the communication unit 510. The blocks 510/530/540a to 540d correspond to the blocks 410/430/440 of FIG. 4.

The communication unit 510 may transmit and receive signals (e.g., data, control signals, etc.) to and from external devices such as another vehicle, a base station (e.g., a base station, a road side unit, etc.), and a server. The control unit 520 may control the elements of the car or autonomous driving car 500 to perform various operations. The control unit 520 may include an electronic control unit (ECU).

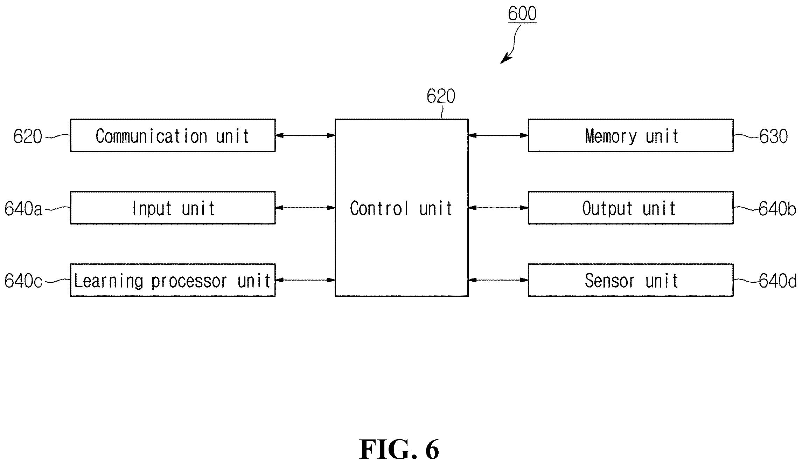

FIG. 6 illustrates an example of an AI device applied to the present disclosure. For example, the AI device may be implemented as a fixed device or a movable device such as TV, projector, smartphone, PC, laptop, digital broadcasting terminal, tablet PC, wearable device, set-top box (STB), radio, washing machine, refrigerator, digital signage, robot, vehicle, etc.

Referring to FIG. 6, the AI device 600 may include a communication unit 610, a control unit 620, a memory unit 630, an input/output unit 640a/640b, a learning processor unit 640c and a sensor unit 640d. Blocks 610 to 630/640A to 640D may correspond to blocks 310 to 330/340 of FIG. 3, respectively.

The communication unit 610 may transmit and receive a wired and wireless signal (e.g., sensor information, user input, learning model, control signal, etc.) to and from external devices such as another AI device (e.g., 100x, 120, 140 in FIG. 1) or an AI server (140 in FIG. 1) using wired/wireless communication technology. To this end, the communication unit 610 may transmit information in the memory unit 630 to an external device or send a signal received from an external device to the memory unit 630.

The control unit 620 may determine at least one executable operation of the AI device 600 based on information determined or generated using a data analysis algorithm or machine learning algorithm. In addition, the control unit 620 may control the components of the AI device 600 to perform the determined operation. For example, the control unit 620 may request, search, receive, or utilize the data of the learning processor 640c or the memory unit 630, and control the components of the AI device 600 to perform predicted operation or operation determined to be preferred among at least one executable operation. In addition, the control unit 620 collects history information including a user's feedback on the operation content or operation of the AI device 600, and stores it in the memory unit 630 or the learning processor 640c or transmit it to an external device such as the AI server (140 in FIG. 1). The collected history information may be used to update a learning model.

The memory unit 630 may store data supporting various functions of the AI device 600. For example, the memory unit 630 may store data obtained from the input unit 640a, data obtained from the communication unit 610, output data of the learning processor unit 640c, and data obtained from the sensor unit 640. Also, the memory unit 630 may store control information and/or software code required for operation/execution of the control unit 620.

The input unit 640a may obtain various types of data from the outside of the AI device 600. For example, the input unit 620 may obtain learning data for model learning, input data to which the learning model is applied, etc. The input unit 640a may include a camera, a microphone and/or a user input unit, etc. The output unit 640b may generate audio, video or tactile output. The output unit 640b may include a display unit, a speaker and/or a haptic module. The sensor unit 640 may obtain at least one of internal information of the AI device 600, surrounding environment information of the AI device 600 or user information using various sensors. The sensor unit 640 may include a proximity sensor, an illuminance sensor, an acceleration sensor, a magnetic sensor, a gyro sensor, an inertial sensor, an RGB sensor, an IR sensor, a fingerprint recognition sensor, an ultrasonic sensor, an optical sensor, a microphone, and/or a radar.

The learning processor unit 640c may train a model composed of an artificial neural network using learning data. The learning processor unit 640c may perform AI processing together with the learning processor unit of the AI server (140 in FIG. 1). The learning processor unit 640c may process information received from an external device through the communication unit 610 and/or information stored in the memory unit 630. In addition, the output value of the learning processor unit 640c may be transmitted to an external device through the communication unit 610 and/or stored in the memory unit 630.

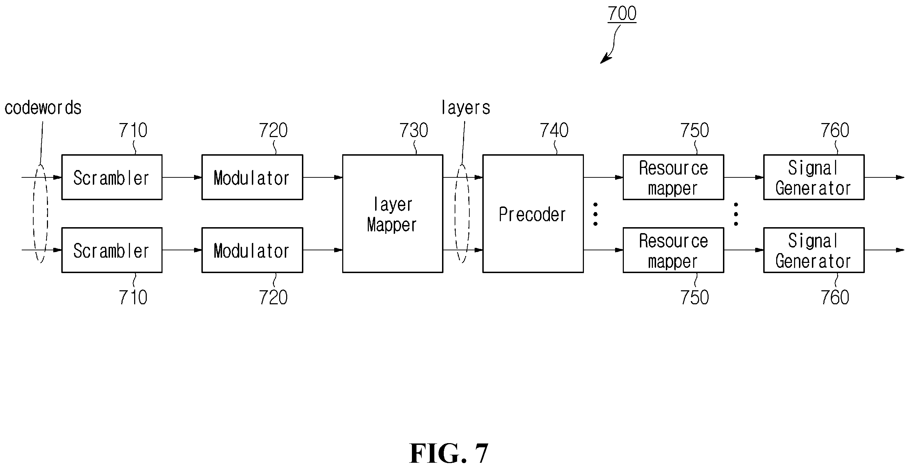

FIG. 7 illustrates a method of processing a transmitted signal applied to the present disclosure. For example, the transmitted signal may be processed by a signal processing circuit. In this case, the signal processing circuit 700 may include a scrambler 710, a modulator 720, a layer mapper 730, a precoder 740, a resource mapper 750, and a signal generator 760. At this time, as an example, the operation/function of FIG. 7 may be performed by the processors 202a and 202b and/or the transceivers 206a and 206b of FIG. 2. Also, as an example, the hardware elements of FIG. 7 may be implemented in the processors 202a and 202b and/or the transceivers 206a and 206b of FIG. 2. As an example, blocks 710 to 760 may be implemented in the processors 202a and 202b of FIG. 2. Also, blocks 710 to 750 may be implemented in the processors 202a and 202b of FIG. 2, and block 760 may be implemented in the transceivers 206a and 206b of FIG. 2, and are not limited to the above-described embodiment.

A codeword may be converted into a radio signal through the signal processing circuit 700 of FIG. 7. Here, the codeword is an encoded bit sequence of an information block. Information blocks may include transport blocks (e.g., UL-SCH transport blocks, DL-SCH transport blocks). The radio signal may be transmitted through various physical channels (e.g., PUSCH, PDSCH). Specifically, the codeword may be converted into a scrambled bit sequence by the scrambler 710. A scramble sequence used for scrambling is generated based on an initialization value, and the initialization value may include ID information of a wireless device. The scrambled bit sequence may be modulated into a modulation symbol sequence by the modulator 720. The modulation method may include pi/2-binary phase shift keying (pi/2-BPSK), m-phase shift keying (m-PSK), m-quadrature amplitude modulation (m-QAM), and the like.

A complex modulation symbol sequence may be mapped to one or more transport layers by the layer mapper 730. Modulation symbols of each transport layer may be mapped to corresponding antenna port(s) by the precoder 740 (precoding). The output z of the precoder 740 may be obtained by multiplying the output y of the layer mapper 730 by a N*M precoding matrix W. Here, N is the number of antenna ports and M is the number of transport layers. Here, the precoder 740 may perform precoding after transform precoding (e.g., discrete Fourier transform (DFT)) on complex modulation symbols. Also, the precoder 740 may perform precoding without performing transform precoding.

The resource mapper 750 may map modulation symbols of each antenna port to time-frequency resources. The time-frequency resources may include a plurality of symbols (e.g., CP-OFDMA symbols and DFT-s-OFDMA symbols) in the time domain and may include a plurality of subcarriers in the frequency domain. The signal generator 760 generates a radio signal from the mapped modulation symbols, and the generated radio signal may be transmitted to other devices through each antenna. To this end, the signal generator 760 may include an inverse fast Fourier transform (IFFT) module, a cyclic prefix (CP) inserter, a digital-to-analog converter (DAC), a frequency uplink converter, and the like.

A signal processing process for a received signal in a wireless device may be configured as the reverse of the signal processing processes 710 to 760 of FIG. 7. For example, a wireless device (e.g., 200a and 200b of FIG. 2) may receive a radio signal from the outside through an antenna port/transceiver. The received radio signal may be converted into a baseband signal through a signal reconstructor. To this end, the signal reconstructor may include a frequency downlink converter, an analog-to-digital converter (ADC), a CP remover, and a fast Fourier transform (FFT) module. Thereafter, the baseband signal may be reconstructed to a codeword through a resource de-mapper process, a postcoding process, a demodulation process, and a de-scramble process. The codeword may be reconstructed to an original information block through decoding. Accordingly, a signal processing circuit (not shown) for a received signal may include a signal reconstructor, a resource de-mapper, a postcoder, a demodulator, a de-scrambler, and a decoder.

## 6G communication system

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, and (vii) connected intelligence with machine learning capacity. The vision of the 6G system may include four aspects such as "intelligent connectivity", "deep connectivity", "holographic connectivity" and "ubiquitous connectivity" and the 6G system may satisfy the requirements shown in Table 4 below. That is, Table 1 shows the requirements of the 6G system.

Table 1

| Per device peak data rate | 1 Tbps |
|---|---|
| E2E latency | 1 ms |

(continued)

| Per device peak data rate | 1 Tbps |
|---|---|
| Maximum spectral efficiency | 100 bps/Hz |
| Mobility support | up to 1000 km/hr |
| Satellite inteqration | Fully |
| AI | Fully |
| Autonomous vehicle | Fully |
| XR | Fully |
| Haptic Communication | Fully |

At this time, the 6G system may have key factors such as enhanced mobile broadband (eMBB), ultra-reliable low latency communications (URLLC), massive machine type communications (mMTC), AI integrated communication, tactile Internet, high throughput, high network capacity, high energy efficiency, low backhaul and access network congestion and enhanced data security.

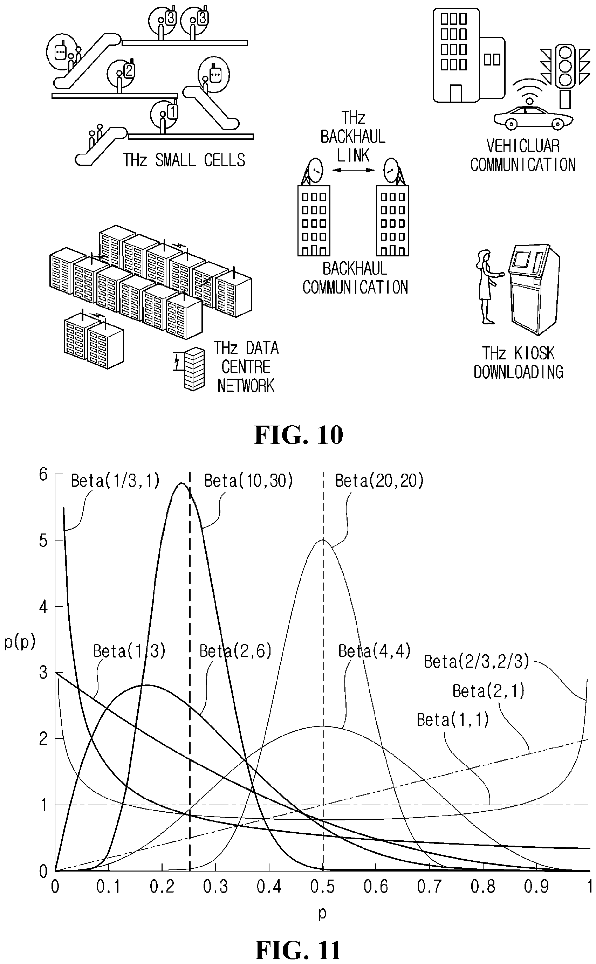

FIG. 10 illustrates an example of a communication structure providable in a 6G system applicable to the present disclosure.

Referring to FIG. 10, the 6G system will have 50 times higher simultaneous wireless communication connectivity than a 5G wireless communication system. URLLC, which is the key feature of 5G, will become more important technology by providing end-to-end latency less than 1 ms in 6G communication. At this time, the 6G system may have much better volumetric spectrum efficiency unlike frequently used domain spectrum efficiency. The 6G system may provide advanced battery technology for energy harvesting and very long battery life and thus mobile devices may not need to be separately charged in the 6G system.

Core implementation technology of 6G system

Artificial intelligence (AI)

The most important and newly introduced technology for the 6G system is AI. AI was not involved in the 4G system. 5G systems will support partial or very limited AI. However, the 6G system will support AI for full automation. Advances in machine learning will create more intelligent networks for real-time communication in 6G. Introducing AI in communication may simplify and enhance real-time data transmission. AI may use a number of analytics to determine how complex target tasks are performed. In other words, AI may increase efficiency and reduce processing delay.

Time consuming tasks such as handover, network selection, and resource scheduling may be performed instantly by using AI. AI may also play an important role in machine-to-machine, machine-to-human and human-to-machine communication. In addition, AI may be a rapid communication in a brain computer interface (BCI). AI-based communication systems may be supported by metamaterials, intelligent structures, intelligent networks, intelligent devices, intelligent cognitive radios, self-sustained wireless networks, and machine learning.

Recently, attempts have been made to integrate AI with wireless communication systems, but application layers, network layers, and in particular, deep learning have been focused on the field of wireless resource management and allocation. However, such research is gradually developing into the MAC layer and the physical layer, and in particular, attempts to combine deep learning with wireless transmission are appearing in the physical layer. AI-based physical layer transmission means applying a signal processing and communication mechanism based on an AI driver rather than a traditional communication framework in fundamental signal processing and communication mechanisms. For example, deep learning-based channel coding and decoding, deep learning-based signal estimation and detection, deep learning-based multiple input multiple output (MIMO) mechanism, and AI-based resource scheduling and allocation may be included.

Machine learning may be used for channel estimation and channel tracking, and may be used for power allocation, interference cancellation, and the like in a downlink (DL) physical layer. Machine learning may also be used for antenna selection, power control, symbol detection, and the like in a MIMO system.

However, the application of DNN for transmission in the physical layer may have the following problems.

Deep learning-based AI algorithms require a lot of training data to optimize training parameters. However, due to limitations in obtaining data in a specific channel environment as training data, a lot of training data is used offline. This is because static training on training data in a specific channel environment may cause a contradiction between diversity and dynamic characteristics of a radio channel.

In addition, current deep learning mainly targets real signals. However, the signals of the physical layer of wireless communication are complex signals. In order to match the characteristics of a wireless communication signal, additional research on a neural network that detects a complex domain signal is required.

Hereinafter, machine learning will be described in greater detail.

Machine learning refers to a series of operations for training a machine to create a machine capable of performing a task which can be performed or is difficult to be performed by a person. Machine learning requires data and a learning model. In machine learning, data learning methods may be largely classified into three types: supervised learning, unsupervised learning, and reinforcement learning.

Neural network learning is to minimize errors in output. Neural network learning is a process of updating the weight of each node in the neural network by repeatedly inputting learning data to a neural network, calculating the output of the neural network for the learning data and the error of the target, and backpropagating the error of the neural network from the output layer of the neural network to the input layer in a direction to reduce the error.

Supervised learning uses learning data labeled with correct answers in the learning data, and unsupervised learning may not have correct answers labeled with the learning data. That is, for example, learning data in the case of supervised learning related to data classification may be data in which each learning data is labeled with a category. Labeled learning data is input to the neural network, and an error may be calculated by comparing the output (category) of the neural network and the label of the learning data. The calculated error is backpropagated in a reverse direction (i.e., from the output layer to the input layer) in the neural network, and the connection weight of each node of each layer of the neural network may be updated according to backpropagation. The amount of change in the connection weight of each updated node may be determined according to a learning rate. The neural network's computation of input data and backpropagation of errors may constitute a learning cycle (epoch). The learning rate may be applied differently according to the number of iterations of the learning cycle of the neural network. For example, in the early stages of neural network learning, a high learning rate is used to allow the neural network to quickly achieve a certain level of performance to increase efficiency, and in the late stage of learning, a low learning rate may be used to increase accuracy.

A learning method may vary according to characteristics of data. For example, when the purpose is to accurately predict data transmitted from a transmitter in a communication system by a receiver, it is preferable to perform learning using supervised learning rather than unsupervised learning or reinforcement learning.

The learning model corresponds to the human brain, and although the most basic linear model may be considered, a paradigm of machine learning that uses a neural network structure with high complexity such as artificial neural networks as a learning model is referred to as deep learning.

The neural network cord used in the learning method is largely classified into deep neural networks (DNN), convolutional deep neural networks (CNN), and recurrent Boltzmann machine (RNN), and this learning model may be applied.

## Terahertz (THz) communication

THz communication may be applied in a 6G system. As an example, a data transfer rate may be improved by increasing a bandwidth. This may be implemented by using sub-THz communication in a broad bandwidth and applying an advanced massive MIMO technique.

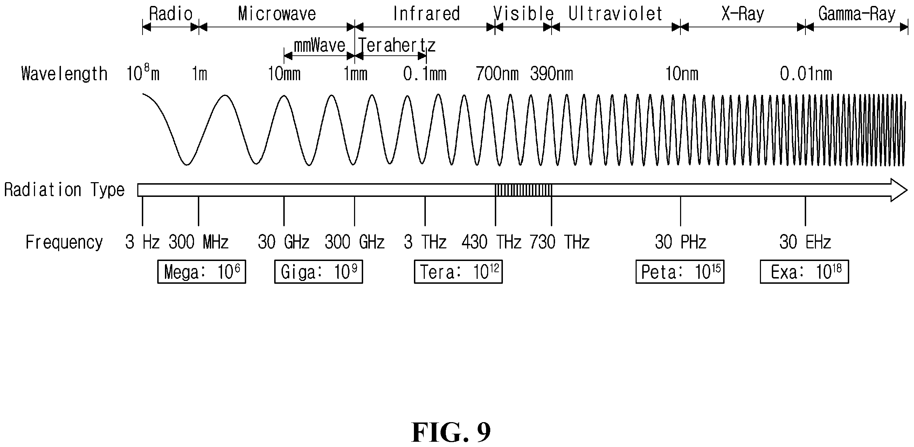

FIG. 9 is a view illustrating an electromagnetic spectrum appliable to the present disclosure. As an example, referring to FIG. 9, the THz wave, also known as submillimeter radiation, usually shows a frequency band between 0.1 THz and 10 THz with a wavelength range of 0.03 mm to 3 mm. The band range of 100 GHz to 300 GHz (Sub THz band) is considered as a main portion of a THz band for cellular communication. If the sub THz band is added to an mmWave band, 6G cellular communication capacity is increased. In the THz band thus defined, the range of 300 GHz to 3 THz belongs to a far-infrared radiation (IR) frequency band. The 300 GHz to 3 Thz band is a part of the optical band but is a boundary of the optical band and immediately follows the RF band. Accordingly, this 300 GHz to 3 THz band is similar to RF.

As main features, THz communication includes (i) a bandwidth broadly available for supporting a very high data transfer rate and (ii) high path loss that occurs in a high frequency (a high directivity antenna is indispensable). A narrow beam width generated in a high directivity antenna reduces interference. A small wavelength of a THz signal enables a far larger number of antenna elements to be integrated into a device and a BS operating in this band. Thus, it is possible to use an advanced adaptive array technique capable of overcoming a range constraint.

## THz wireless communication

FIG. 10 is a view illustrating a THz communication method applicable to the present disclosure.

Referring to FIG. 10, THz wireless communication uses a THz wave with a frequency of about 0.1 to 10 Thz (1 THz = 1012 Hz) and may mean THz band wireless communication using a very high carrier frequency of 100 GHz or above. THz waves are located between the radio frequency (RF)/millimeter (mm) and the infrared radiation (IR) band, penetrate nonmetal/nonpolarized materials better than visual light/IR, and have a shorter wavelength than RF/mm waves so that they may have high straightness and enable beam focusing.

## Multi-arm bandits (MAB) and Thompson sampling (TS)

MAB means a system that has an environment of a plurality of selectable candidates, only one of which may be selected at a time, different rewards are provided to each candidate in response to selection. Herein, the selectable candidates may be referred to as arms. Herein, the MAB problem is seeking a solution to how to select to maximize a sum of rewards, when a limited number (N) of selection opportunities are given.

The MAB problem may be solved through exploration and exploitation. Exploitation is a method of selecting a best candidate based on existing observation, and exploration is a method of selecting a new candidate to obtain more observation results. If there are very few accumulated observations, a selection may be made based on erroneous information, and on the other hand, if there are too many observations, unnecessary opportunity cost may occur to obtain further information despite sufficient information. Thus, exploitation and exploration are in a trade-off relation, and optimizing this is the key to solving the MAB problem.

As one approach to solving the MAB problem, Thompson sampling may be used. Thompson sampling expresses a probability of positive reward in selecting each arm in a beta distribution. Herein, the beta distribution is a probability distribution model that is expressed by two parameters $\alpha$ and $\beta$. According to Thompson sampling, for each of beta distributions, values are randomly sampled on an x axis and a candidate corresponding to a largest value is identified, and thus the candidate is selected. A value of reward according to selection of the candidate is used to update a and $\beta$ constituting the beta distribution of the candidate. For example, a positive result increases $\alpha$ by 1, and a negative result increases $\beta$ by 1.

In Thompson sampling, a beta distribution used to express a probability distribution of each candidate is defined as in Equation 1.

$$\text{Equation 1}$$
$$Beta(x|\alpha,\beta) = \frac{1}{B(\alpha,\beta)} x^{\alpha-1}(1-x)^{\beta-1}$$
$$B(\alpha,\beta) = \int_0^1 x^{\alpha-1}(1-x)^{\beta-1}dx$$

Referring to Equation 1, a beta distribution is a continuous probability distribution that is defined in a section [0, 1] by two parameters $\alpha$ and $\beta$. A beta distribution may be visualized in a graph, as shown in FIG. 11 below. FIG. 11 illustrates examples of probability density functions of beta distribution applicable to the present disclosure. FIG. 11 exemplifies beta distributions with (a, $\beta$) being (1/3,1), (10,30), (20,20), (1,3), (2,6), (4,4), (2/3,2/3), (2,1) and (1,1). Referring to FIG. 11, as the value of $\alpha/(\alpha+\beta)$ increases, the center position of a beta distribution becomes close to 1, and as the value of $\beta/(\alpha+\beta)$ increases, the center position of a beta distribution becomes close to 0. As the value of $(\alpha+\beta)$ increases, a width of a beta distribution becomes narrower, and all the values become close to a center. In addition, the value of $(\alpha+\beta)$ decreases, values of a beta distribution disperse widely.

According to Thompson sampling, a reward distribution of each candidate is estimated using existing data, and a candidate, which will give a highest reward, is selected according to the estimated distribution. Specifically, by random sampling based on a beta distribution, a single candidate is selected probabilistically. Based on a result of actions performed according to the selected candidate, $\alpha$ or $\beta$ of the selected candidate is updated. If the candidate is selected more times, the beta distribution changes to a form more concentrated in a center position, and as the proportion of $\alpha$ increases, the probability of being selected again becomes higher, and as the proportion of $\beta$ increases, the probability of being selected again becomes lower. If the candidate is selected less times, the beta distribution changes to a form that spreads widely, and the possibility of being selected later occurs.

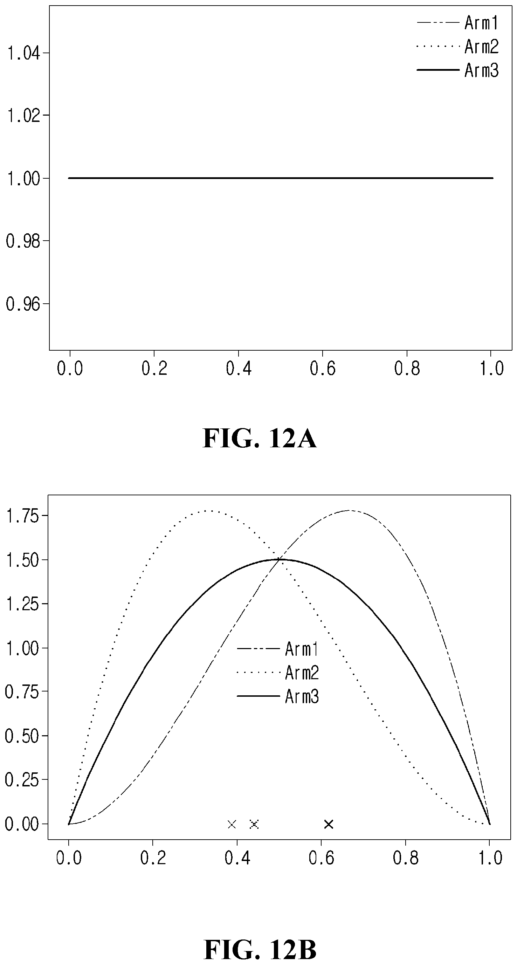

Concrete examples of updates of beta distributions are shown in FIG. 12A to FIG. 12D below. FIG. 12A to FIG. 12D illustrate an example of update of a probability distribution model applicable to the present disclosure. FIG. 12A to FIG. 12D exemplify changes of three beta distributions (e.g. Arm 1, Arm 2, Arm 3) when about 1500 selections are made.

Referring to FIG. 12A, Arm 1, Arm 2, and Arm 3 initially have a same (a, $\beta$) of (1, 1), (1, 1) and (1, 1). Because $(\alpha, \beta)$ is (1, 1), a beta distribution has a uniform distribution with a same probability (e.g. 1) for every value of x. As all the three arms have a same probability distribution, exploration begins with a same probability.

Referring to FIG. 12B, after exploration is performed about 8 times, Arm 1, Arm 2 and Arm 3 have (3, 2), (2, 3) and (2, 2) respectively for (a, β). The probability of selecting each arm is updated according to update of the beta distribution. No clear difference is identified among the arms. For each of Arm 1, Arm 2 and Arm 3, one value is sampled on an x-axis based on a probability. In FIG. 12B, because a largest value is selected in the beta distribution of Arm 3, Arm 3 will be selected. Selection of a value is based on a beta distribution, and random sampling considering a probability is performed. For example, in the beta distribution of (2, 2) as shown in Arm 3, if random sampling is performed in consideration of a probability, 0.5 with a highest probability is selected with a highest frequency, but a value other than 0.5 may also be selected with a lower frequency. Specifically, in the beta distribution of (2, 2) as shown in Arm 3, because a y-axis value of 0.5 is about 1.5, and a y-axis value of 0.2 is about 1, it may be understood that a frequency with which 0.5 is selected by random sampling is about 1.5 times a frequency.

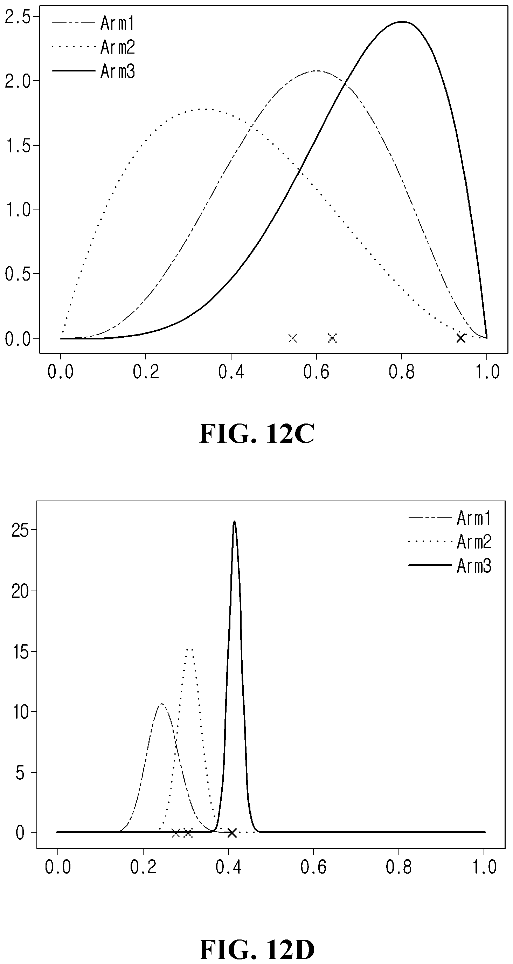

Referring to FIG. 12C, after selection is made 13 times, (a, β) of Arm 1, Arm 2 and Arm 3 is (4, 3), (2, 3) and (5, 2) respectively. In FIG. 12C, the probability of being selected tends to be lowered in the order of Arm 3, Arm 1 and Arm 2. Herein, for each of Arm 1, Arm 2 and Arm 3, one value is sampled on an x-axis based on a probability, and because a largest value is selected in the beta distribution of Arm 3, Arm 3 will be selected. Referring to FIG. 12D, after selection is made 1496 times, (a, β) of Arm 1, Arm 2 and Arm 3 is (33, 100), (100, 223) and (436, 611) respectively. As exploration is performed as sufficiently as about 1500 times, Arm 3 has a significantly high probability of being selected.

## Specific embodiments of the present disclosure

The present disclosure relates to a handover technique, and more particularly, to a technique of controlling a measurement gap allocated for performing measurement for handover. Specifically, the present disclosure proposes a seamless handover technique based on an artificial intelligence (AI).

As the number of frequency bands used for communication increases and a coverage area of each cell decreases, the frequency of a handover requiring a configuration of a measurement gap may increase like an inter-frequency or inter-radio access technology (RAT) handover. When a handover is performed based on a configuration of a fixed measurement gap and a signal quality for an adjacent cell (e.g. received signal strength (RSS), reference signal received power (RSRP), etc.), overall communication performance may be degraded because communication is interrupted during the measurement gap. For example, phenomena like throughput reduction, delay increase, and dropped call may occur. Accordingly, the present disclosure proposes a technique for minimizing the effect of a measurement gap during a handover and also improving power efficiency of a terminal.

An inter-frequency/inter-RAT handover in an existing cellular communication system may be performed as follows. After being connected to a cellular network, a terminal measures a RSS value of a serving cell according to a measurement configuration provided from a base station. If the RSS value becomes lower than a set threshold value, the terminal determines that a specific event (e.g. Event A2) is satisfied, and transmits a measurement report to the base station. Next, a serving base station delivers the measurement configuration including information associated with the measurement gap, and the terminal alternately measures RSS values of the serving cell and an adjacent cell and then transmits a measurement report. The serving base station determines a handover based on a measured RRS value and requests the handover to a target base station. When receiving a response to the handover request, the serving base station transmits a handover command to the terminal. When the handover is completed, the terminal transmits a confirm signal.

If a fixed measurement gap is set according to the above-described method and a handover is performed based on alternate measurement results for RSS values of a serving cell and an adjacent cell, on-going communication may be interrupted during the measurement gap. Accordingly, a method for minimizing the effect of a measurement gap is needed. According to various embodiments, when a terminal performs a handover to a target cell, a measurement gap may be differently set according to an accumulated report. For example, if a success rate of handover to a past target cell is equal to or greater than a predetermined value, a RRS value measurement time may be configured to be shorter than an existing one. On the other hand, if the success rate is less than the predetermined value, it is desirable that the RSS value measurement time is set to be relatively long like the exiting one. The present disclosure proposes a seamless handover technique that overcomes such a limitation by using an AI algorithm.

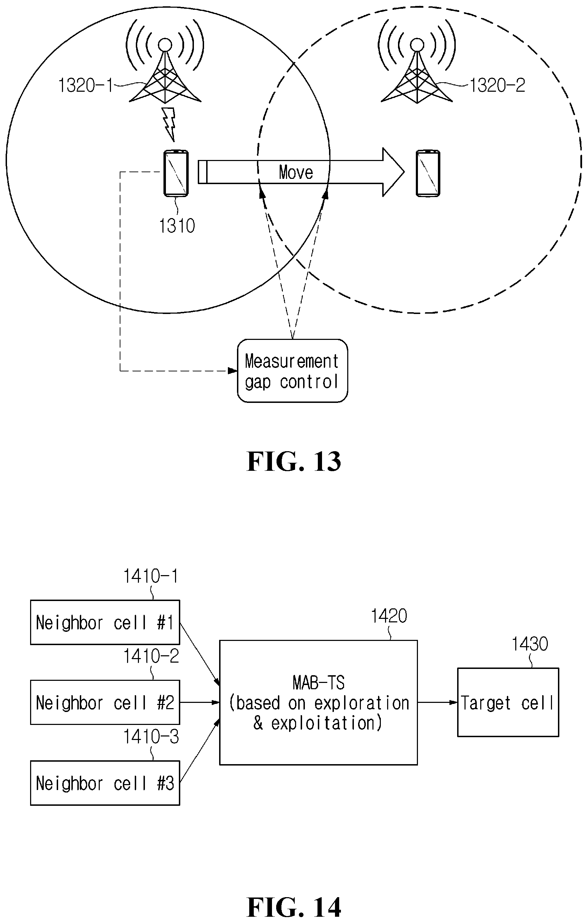

FIG. 13 illustrates a concept of handover in a wireless communication system according to an embodiment of the present disclosure. FIG. 13 exemplifies a case of handover of a terminal 1310 from a first base station 1320-1 to a second base station 1320-2. The first base station 1320-1 and the second base station 1320-2 are operated in different frequency bands or perform communication based on different RATs. Referring to FIG. 13, the terminal 1310 moves from a cell of the first base station 1320-1 to a cell of the second base station 1320-2. Accordingly, a handover to the second base station 1320-2 is needed. At this time, because the first base station 1320-1 and the second base station 1320-2 are operated in different frequency bands or perform communication based on different RATs, the terminal 1310 needs to perform measurement for the second base station 1320-2 by using a measurement gap.

According to various embodiments, when a RSS value is measured for an adjacent cell, that is, a cell of the second base station 1320-2, a length or interval of a measurement gap is adjusted according to a success rate of past handover. That is, unlike an existing method using a fixed measurement gap, if there is a cell with a success rate of handover to a target cell being equal to or greater than a predetermined value, AI-based prediction may be used to reduce a time of a measurement gap or increase an interval so that the effect of the measurement gap on communication interruption may be minimized.

A technique of controlling a measurement gap for handover according to various embodiments may be based on the Thompson sampling (TS) technique that ensures excellent performance among methods for solving the MAB problem. Based on the TS technique, it is possible to define an algorithm that determines a best target cell for a terminal when performing a handover in a current situation and a current environment. MAB is a technique of balanced adjustment of recommendation between exploitation and exploration. By the MAB technique, a best target cell for a terminal may be predicted and recommended through exploitation, and a cell with high uncertainty may be recommended through exploration in order to collect more information. In an exploitation-based recommending method, to which an existing method is directed, there is a limitation in that a good cell is preferably recommended with respect to a current situation and a current environment, but the technique according to various embodiments may recommend a proper new cell through exploration, and feedback on the cell may be efficiently reflected in a terminal and a base station. There is a trade-off between exploitation and exploration, and adjusting exploitation and exploration may temporarily seem to be disadvantageous to a terminal but is more efficient overall because many cells are checked through exploration.

FIG. 14 illustrates a concept of target cell selection based on an AI algorithm in a wireless communication system according to an embodiment of the present disclosure. Referring to FIG. 14, based on data about three neighbor cells 1410-1 to 1410-3, when an MAB-Thompson sampling technique 1420 based on exploitation and exploration is applied, a target cell 1430 of one of the neighbor cells 1410-1 to 1410-3 may be selected. According to various embodiments, data used in the MAB-Thompson sampling technique 1420 is a probability distribution for each cell.

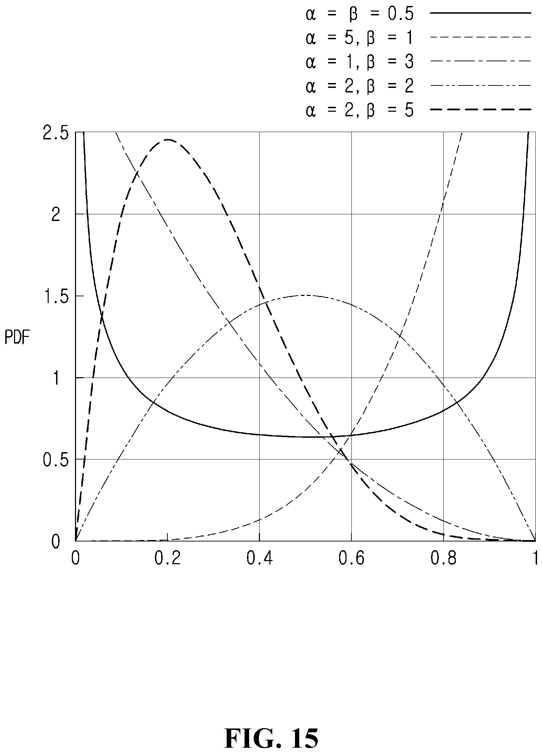

Thompson sampling is an algorithm that estimates a reward distribution for a candidate cell, to which a handover is to be performed, by using past observed data and selects a candidate with a high probability, which is likely to give a highest reward, based on the estimated distribution. In the Bernoulli Thompson sample, which is the most basic one, a reward given to each candidate has a value of 0 or 1 with a probability p through a Bernoulli trial, and a prior probability of p may be based on a beta distribution. A beta distribution is a continuous probability distribution that is defined in a section [0, 1] by two parameters $\alpha$ and $\beta$. A beta distribution may be visualized in a graph, as shown in FIG. 15 below.

FIG. 15 illustrates examples of probability density functions of beta distribution available in a wireless communication system according to an embodiment of the present disclosure. FIG. 15 exemplifies beta distributions with (a, $\beta$) being (0.5, 0.5), (5, 1), (1, 3), (2, 2) and (2, 5). Referring to FIG. 15, as the value of $\alpha/(\alpha+\beta)$ increases, the center position of a beta distribution becomes close to 1, and as the value of $\beta/(\alpha+\beta)$ increases, the center position of a beta distribution becomes close to 0. The parameters $\alpha$ and $\beta$ are determined based on, when each cell is selected, the number of times a reward is 1 and the number of times a reward is 0. That is, for a selected candidate, if the reward of 1 and the reward of 0 occur m times and n times respectively, a reward probability of the cell is estimated to have a distribution of beta (m, n).

In case Thompson sampling is applied to handover according to various embodiments, cells (e.g. the neighbor cell #1 to the neighbor cell #3 of FIG. 14) correspond to beta distributions exemplified in FIG. 15. In this case, a cell is selected using probability matching based on given beta distributions, that is, estimated distributions, and this is a method of maximizing a reward for a selected cell in a base station.

In order to apply the above-described Thompson sampling technique, a base station according to an embodiment has TS model beta distribution information based on information on a handover from its own cell to other cells, that is, information associated with a past handover. Herein, the information associated with the past handover includes a handover success probability with each adjacent cell being a target cell. When one terminal performs a handover to a specific adjacent cell, a reward value (e.g. 0 or 1) is determined according to a state after the handover, and a beta distribution of the adjacent cell may be updated based on the reward value.

In order to determine a reward value for update of a beta distribution, a base station may collect necessary information. Collected information is used to create an interested evaluation index and includes factors to be considered when determining whether or not a handover is successful. Herein, collected information and an evaluation index created based on the collected information may be collectively referred to as 'evaluation information'. For example, in case whether or not QoS is maintained is used as an evaluation index, collected information may include information associated with a QoS parameter. Through evaluation of collected information, in other words, through an evaluation index created based on collected information, a reward value (e.g. 0 or 1) is determined, and a beta distribution of a target cell may be updated based on the determined reward value. For example, if a reward value is 1, $\alpha$ may increase by 1, and if the reward value is 0, $\beta$ may increase by 1. Information collected for determining a reward value and a rule of determining a reward value from collected information may be designed in various ways according to factors to be reflected in performing a handover.

According to an embodiment, a reward value may be determined based on at least one of information regarding whether or not a QoS is maintained and information on signal quality. In other words, whether or not QoS is maintained and a change of signal quality may be used as an evaluation index. To this end, collected information may include a QoS index (e.g. lowest transfer rate, latency time, and throughput), signal quality in a serving cell before a handover, and signal quality in a new serving cell after a handover. In this case, after completing a handover, a base station may check whether or not QoS is maintained and signal quality in a new serving cell and determine a reward value to be reflected in a beta distribution corresponding to a corresponding neighbor cell based on a checking result. A criterion for determing a reward value may be defined in various ways. For example, in case QoS is maintained for a predetermined time and signal quality (e.g. RSS, RSRP) is equal to or greater than a threshold value, a reward value may be determined as 1. As another example, if QoS is not maintained for a predetermined time, a reward value may be 0, and if QoS is maintained for the predetermined time, the reward value may be determined accoording to a decison as in Equation 2.

## Equation 2

$$R = \begin{cases} 0, \cdots RSS_T < RSS_S + \Delta \\ 1, \cdots RSS_T \geq RSS_S + \Delta \end{cases}$$

In Equation 2, R denotes a reward value, $RSS_T$ denotes a RSS value for a target cell, RSSs denotes a RSS value for a serving cell, and $\Delta$ denotes an offset value.

According to Equation 2, a base station may compare a RSS value for a new serving cell and a threshold value (e.g. sum of a RSS value for a previous serving cell and a predetermined value) and determine a reward value according to a comparison result.

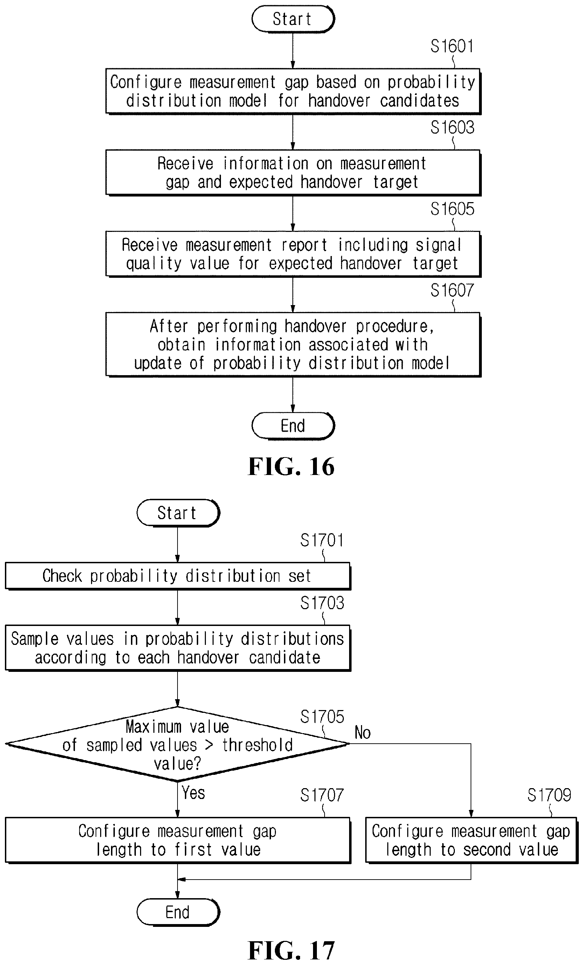

FIG. 16 illustrates an example of a procedure of controlling a handover in a wireless communication system according to an embodiment of the present disclosure. FIG. 16 exemplifies a method of operating a base station (e.g. the first base station 1320-1 of FIG. 13) that controls a handover.

Referring to FIG. 16, at step S1601, a base station sets a measurement gap based on a probability distribution model for handover candidates. Herein, the handover candidates may include neighbor base stations adjacent to the base station, and the probability distribution model may include probability distributions for handover success of the neighbor base stations. The probability distributions include beta distributions and may be updated according to a result of handover from the base station to a neighbor base station. That is, the probability distributions reflect whether or not past accumulated handovers from the base station to a neighbor base station were successful. Specifically, the base station may sample a value from each of beta distributions of the neighbor base stations and determine a length or interval of a measurement gap based on a maximum value of sampled values. For example, a handover success probability to a neighbor base station corresponding to a maximum value becomes higher, an amount of a resource occupied by a measurement gap may be reduced. Herein, the length or interval of the measurement gap may be selected by one of a plurality of candidates that are defined stepwise according to a success probability of handover to a neighbor base station corresponding to a maximum value.

At step S1603, the base station transmits information on the measurement gap and an expected handover target. In other words, the base station transmits measurement configuration information including information on the measurement gap configured at step S1601 and information on the expected handover target selected by the base station. Herein, the expected handover target means a neighbor base station corresponding to a maximum value among sampled values. The expected handover target may be referred to 'recommended handover target', 'recommended target cell', 'selected candidate cell', 'expected target cell', or any other term with technically equivalent meaning. Herein, the measurement configuration information may further information on at least one neighbor base station that becomes a measurement object, other than the expected handover target.

At step S1605, the base station receives a measurement report including a signal quality value for the expected handover target. The measurement report includes a result of measurement of a terminal that is performed during the measurement gap. Herein, the signal quality value for the expected handover target may be received in a state where a weight is applied to a value measured by the terminal. Herein, the measurement report may further include a signal quality value for at least one neighbor base station that becomes a measurement object, other than the expected handover target.

At step S1607, after performing a handover procedure, the base station obtains information associated with update of a probability distribution model. Herein, the information associated with update of the probability distribution model may include information indicating an updated probability distribution model or evaluation information necessary to update the probability distribution model. In addition, the evaluation information is information associated with a reward value for update of a beta distribution and may include a reward value or information used for determining the reward value. For example, the information used for determining the reward value may include at least one of a QoS value, evaluation about QoS (e.g. information regarding whether or not QoS is maintained), signal quality, and information associated with a change of signal quality before and after handover. According to an embodiment, information associated with update of a probability distribution model may be received through a base station of a target cell during a handover procedure. For example, information associated with update of a probability distribution model may be included in a message for notifying completion of handover. According to another embodiment, information associated with update of a probability distribution model may be received through a separate message, after a handover procedure is completed.

Next, although not shown in FIG. 16, after handover of a terminal, a base station may update probability distribution information based on obtained information. According to an embodiment, after a base station receives at least one of information regarding whether or not QoS is maintained and information on signal quality, the base station may determine a reward value based on the received information and update probability distribution information based on the determined reward value. According to another embodiment, after a terminal receives a reward value from a base station, the terminal may update probability distribution information based on the received reward value. Herein, the updated probability distribution information may be a beta distribution of a neighbor base station, to which the terminal performs a handover, that is, a target RAT. In this case, the base station may increase one of $\alpha$ or $\beta$ constituting a beta distribution according to a reward value by 1.

FIG. 17 illustrates an example of a procedure of configuring a measurement gap in a wireless communication system according to an embodiment of the present disclosure. FIG. 17 exemplifies a method of operating a base station (e.g. the first base station 1320-1 of FIG. 13) that controls a handover.

Referring to FIG. 17, at step S1701, a base station checks a probability distribution set. The base station checks a probability distribution of each of handover candidates, that is, neighbor base stations. The probability distribution is associated with a handover success probability to a corresponding neighbor base station and may be a beta distribution.

At step S1703, the base station samples values in probability distributions according to each handover candidate. That is, the base station samples values in beta distributions of handover candidates. Herein, the sampling means an operation of selecting a single value in each beta distribution based on a random value, that is, selecting a single value by considering a probability expressed by a beta distribution curve. For example, in the case of beta (1, 1) of FIG. 15, when sampling is performed by considering a probability, 0.5 with a highest probability is selected with a highest frequency, but other values than 0.5 may also be selected with a lower frequency.

At step S1703, the base station compares a maximum value of sampled values and a threshold value. Herein, the maximum value of the sampled values may be interpreted as a handover success probability to a neighbor base station corresponding to the maximum value or a value equivalent thereto.

If the maximum value is greater than the threshold value, at step S1705, the base station sets a length of the measurement gap to a first value. On the other hand, if the maximum value is equal to or less than the threshold value, at step S1705, the base station sets the length of the measurement gap to a second value. Herein, the first value is smaller than the second value. That is, the measurement gap with the maximum value being greater than the threshold value may be configured to have a shorter length than the measurement gap with the maximum value being equal to or less than the threshold value. In other words, an amount of resource occupied per unit time by the measurement gap with the maximum value being greater than the threshold value may be smaller than an amount of resource occupied per unit time by the measurement gap with the maximum value being equal to or less than the threshold value.

In the embodiment described with reference to FIG. 17, a length of a measurement gap may be determined as a first value or a second value. That is, the embodiment of FIG. 17 exemplifies a case where there are two selectable candidates of a length of a measurement gap. However, according to another embodiment, three or more length candidates may be used. In this case, a possible range of a sampled value may be divided into three or more sections, and candidate values of length may be mapped to each of the sections. Accordingly, a base station may identify a section, to which a maximum value of sampled values belongs, and set a candidate value corresponding to the identified section as a length of a measurement gap.

A measurement gap may be configured as in the embodiment described with reference to FIG. 17. In the example of FIG. 17, a length of a measurement gap is exemplified to be adjusted based on sampled values. However, according to another embodiment, not a length of a measurement gap, but an interval of the measurement gap, that is, a time interval between consecutive two measurement gaps may be adjusted. In this case, as the interval increases, an amount of resource occupied per unit time by a measurement gap decreases, so that an interval of a measurement gap with a maximum value being greater than a threshold value may be configured to be longer than an interval of a measurement gap with the maximum value being equal to or less that the threshold value.

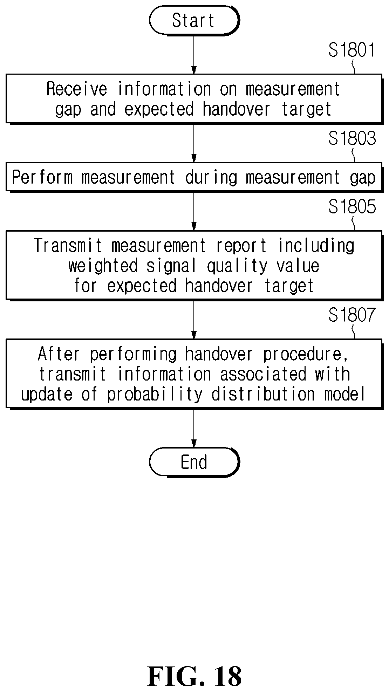

FIG. 18 illustrates an example of a procedure of performing a handover in a wireless communication system according to an embodiment of the present disclosure. FIG. 18 exemplifies a method of operating a terminal (e.g. the terminal 1310 of FIG. 13) that performs a handover.

Referring to FIG. 18, at step S1801, a terminal receives information on a measurement gap and an expected handover target. In other words, the terminal receives measurement configuration information including information on the measurement gap set by a base station and information on the expected handover target selected by the base station. The information on the measurement gap may include at least one of a length of the measurement gap, a repetition period of the measurement gap, and an initial offset of the measurement gap. Herein, the repetition period means an interval between adjacent measurement gaps. The measurement configuration information may further include information on at least one neighbor base station that is a measurement object, other than the expected handover target. In addition, the measurement configuration information may further include at least one of measurement object information, configuration information on a measurement report, and measurement quantity information.

At step S1803, the terminal performs measurement during the measurement gap. The terminal may perform measurement based on the measurement configuration information. For example, for a frequency or a RAT indicated by the measurement object information, measurement may be performed during the measurement gap by using a filter coefficient indicated by the measurement quantity information. Herein, the terminal may perform measurement for the expected handover target and the at least one neighbor base station.

At step S1805, the terminal transmits a measurement report including a weighted signal quality value for the expected handover target. The measurement report includes a result of the measurement of the terminal performed during the measurement gap. Herein, according to an embodiment, the terminal applies a weight to a measured value for the expected handover target. Herein, the weight is applied in order to improve a probability with which the expected handover target is selected as a target base station. That is, a signal quality value for the expected handover target, which is reported to a base station, is larger than the weighted value. For example, the terminal may add a positive offset value (hereinafter 'Δ value') to the measured value for the expected handover target or multiply a weight of 1 or above therewith. In addition, the measurement report may further include a measured value for the at least one neighbor base station that is a measurement object other than the expected handover target.

At step S1807, after the terminal performs a handover procedure, the terminal transmits information associated with update of a probability distribution model. Herein, the information associated with update of the probability distribution model may include information indicating an updated probability distribution model or evaluation information necessary to update the probability distribution model. In addition, the evaluation information is information associated with a reward value for update of a beta distribution and may include a reward value or information used for determining the reward value. For example, the information used for determining the reward value may include at least one of a QoS value, evaluation about QoS (e.g. information regarding whether or not QoS is maintained), signal quality, and information associated with a change of signal quality before and after handover. For example, the information associated with update of the probability distribution model may be included in a message for notifying completion of handover. According to another embodiment, the information associated with update of the probability distribution model may be transmitted through a separate message, after the handover procedure is completed.

A terminal provides information associated with update of a probability distribution model as in the embodiment described with reference to FIG. 18. According to an embodiment, information associated with update of a probability distribution model includes a reward value, a terminal determines a reward value based on an evaluation index and then provides the determined reward value to a base station. To this end, a terminal needs to know a rule for determining a reward value. For example, a rule for determining a reward value may be defined beforehand or be signaled from a base station.

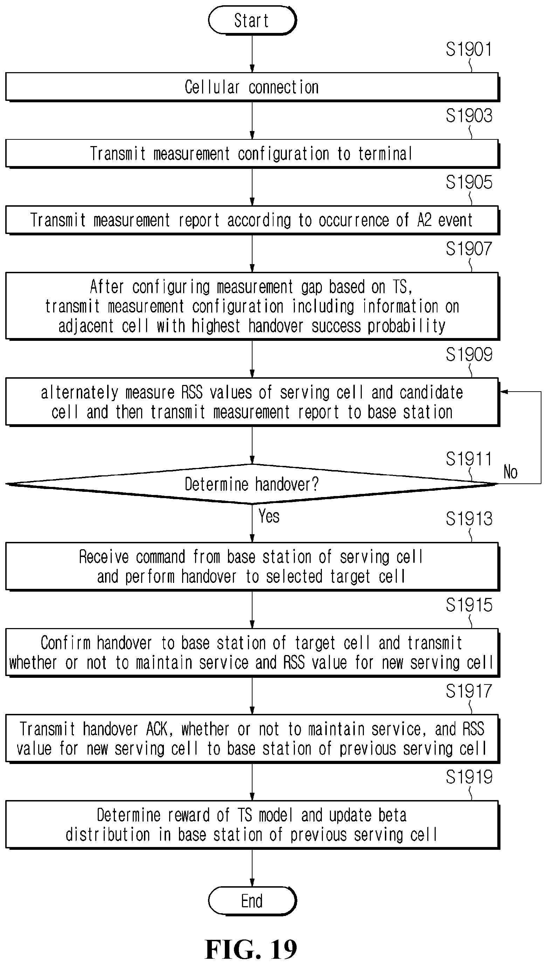

FIG. 19 illustrates an example of a procedure of performing a handover based on a measurement gap controlled by a base station in a wireless communication system according to an embodiment of the present disclosure.

Referring to FIG. 19, at step S1901, a terminal is connected to a cellular network. Next, at step S1903, a base station transmits a measurement configuration to the terminal. At step S1905, based on occurrence of an A2 event, the terminal transmits a measurement report to the base station. That is, the terminal measures a RSS for a serving cell and determines the occurrence of the A2 event, if a measured RSS value is smaller than a predetermined value. When a condition for the A2 event is satisfied, the terminal transmits a measurement report to a base station of the serving cell.

At step S1907, after the base station sets a measurement gap based on Thompson sampling, the base station transmits a measurement configuration including information on an adjacent cell with a highest handover success probability. The base station of the serving cell may randomly sample beta distributions of every candidate cell and select a candidate cell corresponding to a maximum value of sampled values as a cell with a highest success probability in performing a handover. Sampled values indicate a success probability of handover that selects a corresponding candidate cell as a target cell. If a maximum value of sampled values, that is, a handover success probability of a selected candidate cell is equal to or greater than a threshold value, a base station adjusts a measurement gap. For example, as the success probability increases, it is desirable that a time of a measurement gap decreases significantly or an interval thereof increases significantly. In addition, the base station transmits a measurement configuration including information on the adjusted measurement gap and information on a candidate cell selected based on a TS model to the terminal.

At step S1909, the terminal alternately measures RSS values for the serving cell and a candidate cell and transmits a measurement report to the base station. According to an embodiment, the terminal alternately measures RSS values for the serving cell and a candidate cell, increases a RSS value of a candidate cell with a highest handover success probability, which is selected based on a TS model, by +Δ, and then transmits a measurement report including the increased RSS value to the base station of the serving cell. At step S1911, the base station determines whether or not to perform a handover. The base station of the serving cell determines, based on the measurement report, a target cell for handover and whether or not to perform the handover. When it is determined that the handover is to be performed, the base station transmits a handover command.

When it is determined that the handover is to be performed, at step S1913, the terminal receives the handover command from the base station of the serving cell and performs the handover to a selected target cell. At step S1915, the terminal transmits a handover confirm message to a base station of the target cell and transmits whether or not to maintain a service and a RSS value for a new serving cell. At step S1917, a target cell, that is, a base station of the new serving cell transmits a handover ACK message, whether or not to maintain the service, and the RSS value for the new serving cell to the base station of the previous serving cell. That is, after performing the handover to the target cell, the terminal delivers whether or not QoS is maintained and the RSS value for the new serving cell, together with handover ACK information, to the base station of the previous serving cell. At step S1919, the base station of the previous serving cell determines a reward of the TS model and updates a beta distribution. That is, the base station of the previous serving cell determines a reward for an action of the TS model based on the received information and updates a parameter of a corresponding beta distribution.

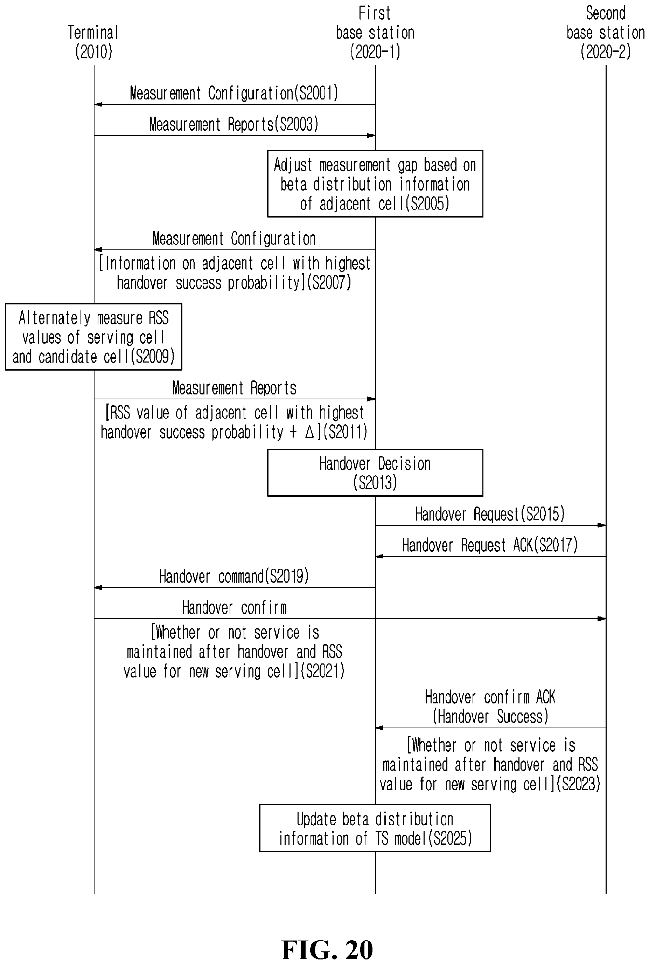

FIG. 20 illustrates an example of a signal flow for performing a handover based on a measurement gap controlled by a base station in a wireless communication system according to an embodiment of the present disclosure. FIG. 20 exemplifies a procedure in which a terminal 2010 performs a handover from a first base station 2020-1 as a serving base station to a second base station 2020-2 as a neighbor base station.

Referring to FIG. 20, at step S2001, the first base station 2020-1 transmits a measurement configuration to the terminal 2010. The measurement configuration includes information necessary for performing measurement. For example, the measurement configuration may include at least one of measurement object information, configuration information on a measurement report, identification information of measurement, measurement quantity information, and measurement gap information.

At step S2003, the terminal 2010 transmits a measurement report to the first base station 2020-1. For example, the terminal 2020 measures a RSS for a serving cell, and if the measured RSS value is smaller than a predetermined value, determines occurrence of an A2 event. When the A2 event occurs, the terminal 2020 transmits a measurement report for notifying the occurrence of A2 event to the first base station 2020-1.

At step S2005, the first base station 2020-1 adjusts a measurement gap based on beta distribution information of an adjacent cell. Specifically, the first base station 2020-1 may randomly sample beta distributions of adjacent cells and select an adjacent cell corresponding to a maximum value of sampled values as an adjacent cell with a highest success probability in performing a handover. In this embodiment, a cell of the second base station 2020-2 is selected as an adjacent cell with a highest handover success probability. Herein, if the handover success probability of the selected adjacent cell is equal to or greater than a threshold value, the first base station 2020-1 adjusts the measurement gap.

At step S2007, the first base station 2020-1 transmits a measurement configuration to the terminal 2010. Herein, the measurement configuration includes information on the adjacent cell with the highest handover success probability. Additionally, the measurement configuration may further include at least one of measurement object information, configuration information on a measurement report, identification information of measurement, measurement quantity information, and measurement gap information.

At step S2009, the terminal 2010 alternately measures RSS values for a serving cell and a candidate cell. In other words, the terminal 2010 measures a RSS value for the first base station 2020-1 and a RSS value for the second base station 2020-2. Additionally, the terminal 2010 may measure a RSS value for at least one different base station indicated by the measurement configuration.

At step S2011, the terminal 2010 transmits a measurement report to the first base station 2020-1. Herein, the measurement report includes a sum of the RSS value of the adjacent cell with the highest handover success probability and $\Delta$. That is, the measurement report reports a sum of a RSS value measured for the second base station 2020-2 and $\Delta$ as a RSS value for the second base station 2002-2.

At step S2013, the first base station 2020-1 determines a handover to the second base station 2002-2. The first base station 2020-1 selects the second base station 2020-2 as a target cell for the handover based on the measurement report received at step S2011 and determines the handover to the second base station 2020-2.

At step S2015, the first base station 2020-1 transmits a handover request message to the second base station 2020-2. The handover request message includes information on the terminal 2010. Accordingly, the second base station 2020-2 determines whether or not the handover of the terminal 2010 is acceptable. In this embodiment, the handover of the terminal 2010 is accepted.

At step S2017, the second base station 2020-2 transmits a handover request ACK message to the first base station 2002-1. That is, the second base station 2020-2 notifies that the handover of the terminal 2010 is acceptable.

At step S2019, the first base station 2020-1 transmits a handover command message to the terminal 2010. The handover command message includes information on a target cell, that is, information on the second base station 2020-2.

At step S2021, the terminal 2010 transmits a handover confirm message to the second base station 2020-2. Although not shown in FIG. 20, the terminal 2010 may perform a random access procedure for the second base station 2020-2 for handover and configure a connection. Then, the terminal 2010 transmits the handover confirm message through the configured connection. Herein, the handover confirm message may include an evaluation index, for example, whether or not a service is maintained after handover and a RSS value for a new serving cell, that is, a cell of the second base station 2020-2.

At step S2023, the second base station 2020-2 transmits a handover confirm ACK message to the first base station 2020-1. The handover confirm ACK message notifies success of the handover. In addition, the handover confirm ACK message may include the evaluation index received from the terminal 2010, for example, whether or not the service is maintained after handover and the RSS value for the new serving cell, that is, a cell of the second base station 2020-2. That is, the second base station 2020-2 delivers the evaluation index received from the terminal 2010 to the first base station 2020-1.

At step S2025, the first base station 2020-1 updates beta distribution information of a TS model. Specifically, the first base station 2020-1 determines a reward value and updates a beta distribution based on the reward value. In other words, the first base station 2020-1 may update the parameter $\alpha$ or the parameter $\beta$ of a beta distribution of the second base station 2020-2.

As shown in the above-described embodiments, a terminal measures RSS values for a serving cell and candidate cells, applies a weight to a RSS value (e.g. RSS+$\Delta$) of a candidate cell selected in a TS model, and then transmits a measurement report to the serving cell. Herein, the value of $\Delta$ may be defined in advance. Alternatively, the value of $\Delta$ or a range of the value of $\Delta$ may be configured by a base station, and information on the value of $\Delta$ or the range of the value of $\Delta$ may be included in a measurement configuration including measurement gap information. According to an embodiment, when the value of $\Delta$ is provided, a terminal may apply the provided value of $\Delta$. According to another embodiment, when the range of the value of $\Delta$ is provided, a terminal may randomly select the value of $\Delta$ within the provided range.

According to various embodiments, a value of $\Delta$ or a range of the value of $\Delta$ may be determined based on at least one of a probability value sampled based on a TS model and RSS values that are reported in the past. For example, a value of $\Delta$ or a range of the value of $\Delta$ may be determined based on one of the two modes listed below.

[Table 2]

| Mode | Description |
|---|---|
| Mode 1 | A mode that enables a cell predicted by a base station to be selected as a target cell. It sets a range of $\Delta$ to a minimum value that makes a final RSS value of the predicted cell greater than a RSS value of every adjacent cell and lets a measurement report be triggered (e.g. greater than a RSS value of a serving cell by a predetermined value). |
| Mode 2 | A mode that increases a probability with which a cell predicted by a base station is selected as a target cell. It sets a range of $\Delta$ to a stepwise value or ratio determined according to a TS value of the predicted cell. |

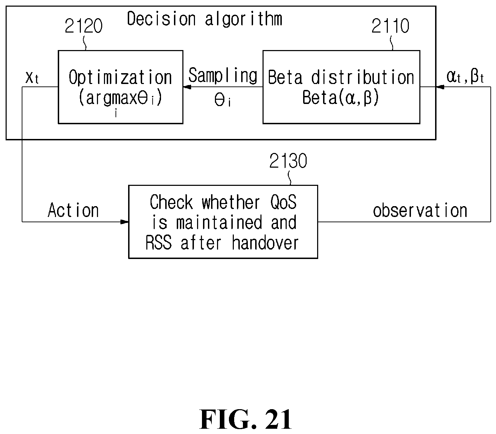

As shown in the various embodiment described above, when a Thomson sampling model is used, handover performance may be gradually improved based on whether or not a service is maintained after handover and channel quality. Beta distribution update according to a reward in a Thompson sampling model is shown in FIG. 21 below.

FIG. 21 illustrates a reward structure based on Thompson sampling (TS) in a wireless communication system according to an embodiment of the present disclosure. FIG. 21 shows a feedback structure of reward based on an evaluation index (e.g. whether or not QoS is maintained and signal quality information after handover) after completion of handover. Referring to FIG. 21, sampling includes an operation of randomly sampling a value in a beta distribution 2110 of candidate cells. A maximum value of sampled values is selected by optimization 2120. An action includes operations of applying a weight to a RSS value (e.g. RSS+$\Delta$) for a candidate cell corresponding to the selected maximum value, that is, having a highest handover success probability and then transmitting a measurement report including RSS values for a plurality of candidate cells. Observation includes an operation of updating parameters of a beta distribution for reward based on an evaluation 2130 that checks whether or not QoS is maintained and a RSS after completion of handover. The updated parameters are reflected in the beta distribution 2110.

Examples of the above-described proposed methods may be included as one of the implementation methods of the present disclosure and thus may be regarded as kinds of proposed methods. In addition, the above-described proposed methods may be independently implemented or some of the proposed methods may be combined (or merged). The rule may be defined such that the base station informs the UE of information on whether to apply the proposed methods (or information on the rules of the proposed methods) through a predefined signal (e.g., a physical layer signal or a higher layer signal).

Those skilled in the art will appreciate that the present disclosure may be carried out in other specific ways than those set forth herein without departing from the spirit and essential characteristics of the present disclosure. The above exemplary embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. Moreover, it will be apparent that some claims referring to specific claims may be combined with another claims referring to the other claims other than the specific claims to constitute the embodiment or add new claims by means of amendment after the application is filed.

**Industrial Applicability**

The embodiments of the present disclosure are applicable to various radio access systems. Examples of the various radio access systems include a 3rd generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

**Claims**

1.  A method of operating a terminal in a wireless communication system, the method comprising:

    receiving, from a base station, measurement configuration information including information on a measurement gap and information on an expected target cell;
    performing measurement on at least one adjacent cell including the expected target cell during the measurement gap;
    transmitting, to the base station, a measurement report including a signal quality value for the expected target cell; and
    transmitting information related to an update of the probability distribution model after performing a handover to another base station determined by the base station,
    wherein the signal quality value is determined by weighting a measured value for the expected target cell.

2.  The method of claim 1, wherein the signal quality value is determined by adding an offset value to the measured value.

3.  The method of claim 2, wherein the offset value is defined in advance or is provided from the base station.

4.  The method of claim 2, wherein the offset value is selected by the terminal within a range provided from the base station.

5.  The method of claim 1, further comprising transmitting a signal quality value for the another base station, after performing the handover.

6.  A method of operating a base station in a wireless communication system, the method comprising:

    configuring a measurement gap based on a probability distribution model for adjacent cells;
    transmitting, to a terminal, measurement configuration information including information on the measurement gap and information on an expected target cell;
    receiving, from the terminal, a measurement report including a signal quality value for the expected target cell; and
    receiving information related to an update of the probability distribution model after commanding a handover to another base station determined based on the measurement report.

7.  The method of claim 6, wherein the expected target cell includes an adjacent cell corresponding to a maximum value of sampled values in probability distributions of the adjacent cells included in the probability distribution model.

8.  The method of claim 6, wherein the configuring of the measurement gap comprises:

checking probability distributions corresponding to handover success to the adjacent cells;
selecting the expected target cell among the adjacent cells based on the probability distributions; and
configuring the measurement gap based on a sampled value in a probability distribution of the expected target cell.

9. The method of claim 8, wherein the configuring of the measurement gap based on the sampled value in the probability distribution of the expected target cell comprises:

based on the sampled value being equal to or greater than a threshold value, configuring a length of the measurement gap to a first value; and
based on the sampled value being less than the threshold value, configuring the length of the measurement gap to a second value, and
wherein the first value is smaller than the second value.

10. The method of claim 8, wherein the configuring of the measurement gap based on the sampled value in the probability distribution of the expected target cell comprises:

based on the sampled value being equal to or greater than a threshold value, configuring a length of the measurement gap to a first value; and
based on the sampled value being less than the threshold value, configuring the length of the measurement gap to a second value, and
wherein the first value is greater than the second value.

11. The method of claim 6, further comprising updating a probability distribution for the handover success to the another base station, based on the information related to the update of the probability distribution model.

12. The method of claim 11, wherein the information related to the update of the probability distribution model is updated based on whether to maintain quality of service(QoS) after the handover and a comparison result between a signal quality value for the another base station and a threshold value.

13. The method of claim 11, the updating of the probability distribution comprises determining a reward value for updating a beta distribution included in the probability distribution based on at least one of whether to maintain QoS after the handover and the comparison result between the signal quality value for the another base station and the threshold value.

14. A terminal in a wireless communication system, comprising:

a transceiver; and
a processor coupled with the transceiver,
wherein the processor is configured to:

receive, from a base station, measurement configuration information including information on a measurement gap and information on an expected target cell,
perform measurement on at least one adjacent cell including the expected target cell during the measurement gap,
transmit, to the base station, a measurement report including a signal quality value for the expected target cell, and
transmit information regarding whether to maintain quality of service (QoS), after performing a handover to another base station determined by the base station, and
wherein the signal quality value is determined by weighting a measured value for the expected target cell.

15. A base station in a wireless communication system, comprising:

a transceiver; and
a processor coupled with the transceiver,
wherein the processor is configured to:

configure a measurement gap based on a probability distribution model for adjacent cells,

transmit, to a terminal, measurement configuration information including information on the measurement gap and information on an expected target cell,

receive, from the terminal, a measurement report including a signal quality value for the expected target cell, and

receive information regarding whether to maintain quality of service (QoS) of the terminal, after commanding a handover to another base station determined based on the measurement report.

**16.** A device comprising:

at least one processor; and

at least one computer memory coupled with the at least one processor and storing an instruction that instructs operations when executed by the at least one processor,

wherein the operations control the device to:

receive, from a base station, measurement configuration information including information on a measurement gap and information on an expected target cell,

perform measurement on at least one adjacent cell including the expected target cell during the measurement gap,

transmit, to the base station, a measurement report including a signal quality value for the expected target cell, and

transmit information regarding whether to maintain quality of service (QoS), after performing a handover to another base station determined by the base station, and

wherein the signal quality value is determined by weighting a measured value for the expected target cell.

**17.** A non-transitory computer-readable medium storing at least one instruction, comprising the at least one instruction that is executable by a processor,

wherein the at least one instruction controls a device to:

receive measurement configuration information including information on a measurement gap and information on an expected target cell from a base station,

perform measurement on at least one adjacent cell including the expected target cell during the measurement gap,

transmit a measurement report including a signal quality value for the expected target cell to the base station, and

transmit information regarding whether to maintain quality of service (QoS), after performing a handover to another base station determined by the base station, and

wherein the signal quality value is determined by weighting a measured value for the expected target cell.

EP 4 387 325 A1

**FIG. 1**

FIG. 2

Device(300)

| Communication unit(310)<br>(e.g.,5G Communication unit) | Control unit(320)<br>(e.g.,processor(s)) |
|---|---|
| Communication circuit(312)<br>(e.g.,processor(s),Memory(s)) | Memory unit(330)<br>(e.g.,RAM,storage) |
| Transceiver(s)(314)<br>(e.g.,RF unit(s),antenna(s)) | Additional components(340)<br>(e.g.,power unit/battery, I/O unit,<br>driving unit, computing unit) |

# FIG. 3

440a

Power supply
unit

400

408

420

410

Communication
unit

Control
unit

430

Memory
unit

440c

I/O unit

Display

440d

440b

Interface
unit

# FIG. 4

**FIG. 5**

Car or autonomous driving car (500)

| Communication unit (510) |
| Control unit (520) |
| Memory unit (530) |
| Driving unit (540a) |
| Power supply unit (540b) |
| Sensor unit (540c) |
| Autonomous driving unit (540d) |

550

552

Device (200a,200b)

| Communication unit (512) |
| Control unit (522) |
| Memory unit (532) |
| Driving unit (540a) |
| Power supply unit (540b) |
| Sensor unit (540c) |
| Autonomous driving unit (540d) |

**FIG. 6**

FIG. 7

FIG. 8

FIG. 9

**FIG. 10**

**FIG. 11**

**FIG. 12A**

**FIG. 12B**

**FIG. 12C**

**FIG. 12D**

**FIG. 13**

**FIG. 14**

**FIG. 15**

Start

S1601

Configure measurement gap based on probability
distribution model for handover candidates

S1603

Receive information on measurement
gap and expected handover target

S1605

Receive measurement report including signal
quality value for expected handover target

S1607

After performing handover procedure,
obtain information associated with
update of probability distribution model

End

**FIG. 16**

Start

S1701

Check probability distribution set

S1703

Sample values in probability distributions
according to each handover candidate

S1705

Maximum value
of sampled values > threshold
value?

No

Yes

S1707

Configure measurement gap
length to first value

S1709

Configure measurement gap
length to second value

End

**FIG. 17**

Start

S1801

Receive information on measurement
gap and expected handover target

S1803

Perform measurement during measurement gap

S1805

Transmit measurement report including
weighted signal quality value
for expected handover target

S1807

After performing handover procedure,
transmit information associated with
update of probability distribution model

End

**FIG. 18**

Start

S1901

Cellular connection

S1903

Transmit measurement configuration to terminal

S1905

Transmit measurement report according to occurrence of A2 event

S1907

After configuring measurement gap based on TS,
transmit measurement configuration including information on
adjacent cell with highest handover success probability

S1909

alternately measure RSS values of serving cell and candidate
cell and then transmit measurement report to base station

S1911    No

Determine handover?

Yes    S1913

Receive command from base station of serving cell
and perform handover to selected target cell

S1915

Confirm handover to base station of target cell and transmit
whether or not to maintain service and RSS value for new serving cell

S1917

Transmit handover ACK, whether or not to maintain service, and RSS
value for new serving cell to base station of previous serving cell

S1919

Determine reward of TS model and update beta
distribution in base station of previous serving cell

End

**FIG. 19**

Terminal (2010) | First base station (2020-1) | Second base station (2020-2)

Measurement Configuration(S2001)

Measurement Reports(S2003)

Adjust measurement gap based on beta distribution information of adjacent cell(S2005)

Measurement Configuration
[Information on adjacent cell with highest handover success probability](S2007)

Alternately measure RSS values of serving cell and candidate cell(S2009)

Measurement Reports
[RSS value of adjacent cell with highest handover success probability + Δ](S2011)

Handover Decision (S2013)

Handover Request(S2015)

Handover Request ACK(S2017)

Handover command(S2019)

Handover confirm

[Whether or not service is maintained after handover and RSS value for new serving cell](S2021)

Handover confirm ACK (Handover Success)

[Whether or not service is maintained after handover and RSS value for new serving cell](S2023)

Update beta distribution information of TS model(S2025)

**FIG. 20**

Decision algorithm

2120

2110

$x_t$

Optimization
(argmax$\theta_i$)
    i

Sampling
$\theta_i$

Beta distribution
Beta($\alpha$,$\beta$)

$\alpha_t$,$\beta_t$

2130

Action

Check whether QoS
is maintained and
RSS after handover

observation

# FIG. 21

## INTERNATIONAL SEARCH REPORT

| International application No. |
|---|
| **PCT/KR2021/010813** |

### A. CLASSIFICATION OF SUBJECT MATTER

**H04W 36/00**(2009.01)i; **H04W 36/30**(2009.01)i; **H04W 36/18**(2009.01)i; **H04W 36/08**(2009.01)i

According to International Patent Classification (IPC) or to both national classification and IPC

### B. FIELDS SEARCHED

Minimum documentation searched (classification system followed by classification symbols)

H04W 36/00(2009.01); H04B 7/02(2006.01); H04W 24/00(2009.01); H04W 24/02(2009.01); H04W 24/10(2009.01); H04W 56/00(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: measurement gap, target cell, measurement configuration, report, handover, QoS, offset

### C. DOCUMENTS CONSIDERED TO BE RELEVANT

| Category* | Citation of document, with indication, where appropriate, of the relevant passages | Relevant to claim No. |
|---|---|---|
| Y | KR 10-2018-0035513 A (SAMSUNG ELECTRONICS CO., LTD.) 06 April 2018 (2018-04-06) See paragraphs [0028] and [0205]-[0284]; and figure 7c. | 1,5-6,14-17 |
| A | | 2-4,7-13 |
| Y | US 9282562 B2 (MEDIATEK INC.) 08 March 2016 (2016-03-08) See column 5, line 23 – column 13, line 58; claim 1; and figure 17. | 1,5-6,14-17 |
| A | KR 10-2021-0083652 A (SAMSUNG ELECTRONICS CO., LTD.) 07 July 2021 (2021-07-07) See paragraphs [0162]-[0237]; and figures 1f-1j. | 1-17 |
| A | KR 10-2016-0147774 A (LG ELECTRONICS INC.) 23 December 2016 (2016-12-23) See paragraphs [0063]-[0073]; and figure 12. | 1-17 |
| A | WO 2014-086407 A1 (NOKIA SOLUTIONS AND NETWORKS OY) 12 June 2014 (2014-06-12) See page 14, line 33 - page 16, line 13; and figures 4-5. | 1-17 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **03 May 2022** | **03 May 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/010813**

| Patent document cited in search report | | | Publication date (day/month/year) | Patent family member(s) | | | Publication date (day/month/year) |
|---|---|---|---|---|---|---|---|
| KR | 10-2018-0035513 | A | 06 April 2018 | US | 10355766 | B2 | 16 July 2019 |
| | | | | US | 10673515 | B2 | 02 June 2020 |
| | | | | US | 11005555 | B2 | 11 May 2021 |
| | | | | US | 11251858 | B2 | 15 February 2022 |
| | | | | US | 2018-0091212 | A1 | 29 March 2018 |
| | | | | US | 2019-0288765 | A1 | 19 September 2019 |
| | | | | US | 2020-0252119 | A1 | 06 August 2020 |
| | | | | US | 2021-0281310 | A1 | 09 September 2021 |
| | | | | WO | 2018-062959 | A1 | 05 April 2018 |
| US | 9282562 | B2 | 08 March 2016 | CN | 104115543 | A | 22 October 2014 |
| | | | | CN | 104115543 | B | 27 April 2018 |
| | | | | CN | 104137575 | A | 05 November 2014 |
| | | | | CN | 104137575 | B | 09 January 2018 |
| | | | | EP | 2666332 | A1 | 27 November 2013 |
| | | | | EP | 2666332 | A4 | 16 December 2015 |
| | | | | EP | 2666332 | B1 | 10 April 2019 |
| | | | | EP | 2671394 | A1 | 11 December 2013 |
| | | | | EP | 2671394 | A4 | 29 July 2015 |
| | | | | EP | 2671394 | B1 | 12 April 2017 |
| | | | | JP | 2015-509332 | A | 26 March 2015 |
| | | | | JP | 2015-511424 | A | 16 April 2015 |
| | | | | JP | 5855281 | B2 | 09 February 2016 |
| | | | | JP | 5986642 | B2 | 06 September 2016 |
| | | | | US | 2013-0201851 | A1 | 08 August 2013 |
| | | | | US | 2013-0201852 | A1 | 08 August 2013 |
| | | | | US | 2015-0163810 | A1 | 11 June 2015 |
| | | | | US | 8982725 | B2 | 17 March 2015 |
| | | | | US | 8989042 | B2 | 24 March 2015 |
| | | | | WO | 2013-113291 | A1 | 08 August 2013 |
| | | | | WO | 2013-113293 | A1 | 08 August 2013 |
| KR | 10-2021-0083652 | A | 07 July 2021 | None | | | |
| KR | 10-2016-0147774 | A | 23 December 2016 | CN | 106233765 | A | 14 December 2016 |
| | | | | CN | 106233765 | B | 26 November 2019 |
| | | | | EP | 3138315 | A1 | 08 March 2017 |
| | | | | EP | 3138315 | A4 | 20 December 2017 |
| | | | | EP | 3547753 | A1 | 02 October 2019 |
| | | | | JP | 2017-519400 | A | 13 July 2017 |
| | | | | JP | 6701091 | B2 | 27 May 2020 |
| | | | | KR | 10-2365123 | B1 | 21 February 2022 |
| | | | | US | 2017-0048108 | A1 | 16 February 2017 |
| | | | | US | 2019-0222478 | A1 | 18 July 2019 |
| | | | | WO | 2015-167303 | A1 | 05 November 2015 |
| WO | 2014-086407 | A1 | 12 June 2014 | EP | 2929719 | A1 | 14 October 2015 |
| | | | | EP | 2929719 | B1 | 01 February 2017 |

Form PCT/ISA/210 (patent family annex) (July 2019)